# EUROPEAN PATENT APPLICATION

(11) **EP 4 723 573 A1**
(43) Date of publication of application: **08.04.2026**
(21) Application number: 24204603.5
(22) Date of filing: 04.10.2024
(51) Int. Cl.: H04L 41/0873, H04L 41/0894, H04L 41/22

(54) **METHOD AND APPARATUS FOR MANAGING A SYSTEM AND CONFIGURATIONS VIA POLICIES**

(71) Applicant: Deutsche Telekom AG, 53113 Bonn (DE)
(72) Inventor: HEIDER-AVIET, Andreas, 13187 Berlin (DE)
(74) Representative: 2SPL Patentanwälte PartG mbB

(57) **Abstract**

Provided is concept for managing configurations in systems, particularly in Radio Access Networks (RAN). Embodiments address the complexities of handling network policies and configurations using a graph-based approach. Policies and target objects are modeled as nodes in a graph structure, with their interdependencies represented by connections. This allows for the identification and resolution of conflicts between policies affecting the same target objects. The concept utilizes a graph database for querying and optimizing network performance by ensuring that policies are consistently and effectively applied.

## Description

### Field

The present disclosure generally relates to management of systems and configurations, and, more particularly to management of Radio Access Networks (RAN), particularly focusing on efficient handling of network configuration policies.

### Background

Networks are components of communication systems, responsible for managing connections between user devices and core network infrastructures. Network management involves configuring, optimizing, and maintaining numerous parameters that govern the performance and stability of these systems. As networks evolve and expand, particularly with the introduction of 5G, the complexity and scale of these operations significantly increase.

In the context of radio networks, one important component is the Radio Access Network (RAN). RANs are responsible for managing wireless connections between user devices and the core network. These networks, especially 5GRANs, involve various parameters that need be continuously managed, optimized, and maintained to ensure optimal performance. These parameters include, but are not limited to, bandwidth allocation, signal power levels, frequency assignments, handover thresholds, and quality-of-service (QoS) settings.

In 5G networks, policies refer to a set of rules or configurations that dictate how various network components, such as base stations, radio units, and routers, should operate to meet specific performance objectives. The policies are responsible for controlling various parameters that directly influence the network's behavior and efficiency. For instance, policies may dictate how bandwidth is allocated among users, how transmission power is adjusted in response to network load, or how handovers between base stations are managed to ensure seamless connectivity.

Policies may be highly dynamic in various kinds of (wireless) networks due to the complex demands for faster, more reliable communication services. These networks must adapt in real-time to varying conditions, such as fluctuations in user demand, device mobility, or interference. As a result, network administrators utilize policies to maintain service quality, optimize performance, and meet specific service level agreements (SLAs).

In a 5G network, managed objects (MOs) are representations of the network's physical or logical objects. Each managed object is responsible for providing certain network functionalities or services. These could include base stations, radio units, core network elements, or software components that are essential for network operations. Managed objects are typically associated with various attributes and parameters that can be monitored and controlled. For example, a base station's associated managed object might include attributes such as power levels, connected users, frequency bands, and traffic load. By managing these objects, the system can exert precise control over the behavior of individual network components. Managed objects are fundamental to ensuring that the policies governing the network are applied correctly, as they serve as the entities through which network configurations are executed.

In radio networks, physical objects refer to tangible hardware components that constitute the network infrastructure. This includes base stations, antennas, routers, and other devices that handle signal transmission, processing, and user connectivity. These objects are responsible for the core functioning of the network and are directly managed through policies and configuration settings.

On the other hand, logical objects refer to virtualized components or abstract representations of network functions. With the introduction of 5G and ORAN, many network functions have been virtualized to enhance scalability and flexibility. Logical objects could include central units (CU), distributed units (DU), cells, virtual network functions (VNFs),such as packet gateways, mobility management entities (MMEs), or virtual routers. These logical objects can be created, scaled, and managed dynamically to meet the demands of the network in real-time.

Traditional methods for configuring and managing network policies, particularly in RANs, often involve manual or semi-automated processes. These traditional tools allow network administrators to input and adjust policies through interfaces that map configurations to network elements. However, as the complexity of 5G networks grows, the limitations of traditional tools become more apparent. With the increasing number of connected devices and services, manually managing vast and interdependent network policies becomes inefficient and prone to errors.

One of the major challenges is the interdependencies between network policies. Traditional tools do not explicitly model these dependencies, making it difficult for network operators to predict how changes in one part of the network might affect the overall system. This may lead to policy conflicts that can degrade network performance, reduce service quality, or even cause outages. Additionally, the cascading effects of policies-where a change in one parameter indirectly affects other parts of the network-are often not captured by manual tools, resulting in suboptimal configurations or failures.

The problem to be solved by the present disclosure arises from the limitations of these traditional tools. The increasing complexity and scale of RANs and other complex systems have made it increasingly difficult for operators to ensure consistent and reliable network configurations and performance. Policy conflicts, incomplete policies/configurations, unwanted policies/configurations, misconfigurations, interdependencies, and the inability to anticipate unintended interactions between network elements pose significant challenges. The need for a more sophisticated approach to manage and automate the resolution of these issues (in real-time) may be important for maintaining optimal overall network configuration and performance, particularly as networks evolve with the advent of 5G, 6G and beyond. Without addressing these challenges, network operators risk reduced efficiency, increased manual intervention, and a greater likelihood of service interruptions.

### Summary

This need is addressed by methods and apparatuses in accordance with the independent claims. Possibly advantageous embodiments are addressed by the dependent claims.

According to a first aspect of the present disclosure, a computer-implemented method is proposed for managing a target system and configurations via policies. The method comprises defining a plurality of policies for the target system. Each policy is represented as a respective node in a graph structure and configures desired characteristics or behaviors of at least a part of the target system. The method further comprises defining at least one target object of the target system. The target object is represented as at least one node in the graph structure. The method further comprises establishing connections between the nodes in the graph structure. The connections represent direct or indirect relationships between the plurality of policies and the target object. The graph structure is stored in a graph database- The method further comprises querying the graph database to identify conflicts between different policies affecting the target object. The method further comprises resolving the identified conflicts to obtain a conflict-free configuration of the target object and modifying the graph based on the conflict-free configuration.

Thus, the present disclosure relates to a computer-implemented method for managing a target system and its configurations via policies, using a graph structure to represent and relate policies and target objects. Policies are defined as nodes in the graph, with connections representing relationships between policies and the target objects. The graph structure is stored in a graph database, which is queried to identify conflicts between policies affecting the target object. The method further involves resolving these conflicts to achieve a conflict-free configuration of the target object, and modifying the graph to reflect the updated configuration. This approach offers an efficient and scalable solution for policy management, leveraging the advantages of graph databases for conflict detection and resolution.

According to some embodiments, nodes of the graph structure may comprise policy nodes and representative entity nodes. A policy node comprises one or more policies that define the desired characteristics or behaviors of a part of the target system. A representative entity node includes an identifier of a physical or logical target object of the system, which can be configured or controlled through associated managed objects. These nodes are connected through labeled and directed connections that represent relationships between them. This may enable queries and a better classification and interaction between system components and policies. It may improve traceability and management of network components by using a clear graph structure for policy and object relationships.

According to some embodiments, the nodes of the graph structure may further comprise filter nodes. A filter node may be used to select or group specific target objects based on predefined criteria for targeted policy application. The filter node is directly or indirectly connected to both a policy node and a representative entity node. This may enable flexible grouping of network elements for more precise application of policies. As for any node or connection this may include labels and/or properties. It may allow policies to be applied more efficiently to specific network segments, improving control over diverse configurations.

According to some embodiments, the direct or indirect connection between nodes may define rules or configurations conditioning the connection. Alternatively, the connection may define rules or configurations conditioning the implementation or application of policies in the policy node. This may allow for granular control over how policies interact with network components. It may reduce a likelihood of unintended policy interactions or misconfigurations by setting clear conditions for their application.

According to some embodiments, the nodes of the graph structure may further comprise managed object nodes. A managed object node may include parameters and attributes for controlling or managing a physical or logical target object of the system. This may ensure that the configuration and management of network elements are incorporated into the graph structure. This may provide direct control over the target objects, aligning with policy objectives.

According to some embodiments, a managed object node is directly or indirectly connected to a representative entity node, or a policy node is a direct or indirect linking node between at least one managed object node and a filter node. This may enable more seamless integration of policies and object configurations. This may allow for real-time, condition-based updates of managed objects through policies, optimizing system behavior.

According to some embodiments, the nodes of the graph structure may further comprise version nodes. A version node may include one or more hardware and/or software features associated with one or more physical or logical target objects of the system. This may ensure that valid configurations, system updates and changes to hardware or software can be tracked within the graph structure. This may improve the governance of the target system and the adaptability of the system to hardware or software updates without causing conflicts.

According to some embodiments, the nodes and/or connections of the graph structure are indicative of temporal or geographic validity restrictions, logical or set-theoretic conditions that govern the application of policies within the target system. This may allow policies to be applied under specific temporal, geographic, or conditional constraints. This may enhance the system's flexibility by allowing context-based policy enforcement.

According to some embodiments, querying the graph database may include traversing the graph structure starting from a node while considering labels and conditions associated with nodes and connections that may affect query results. Query results contain data objects associated with nodes and/or connections. This may make the query process more accurate by taking into account relevant conditions or constraints. It may improve precision of querying and the efficiency of conflict detection.

According to some embodiments, resolving the identified conflicts may comprise analyzing the query results to identify dependencies and/or conflicts arising from different policies applied to the same target object, and resolving the conflicts by adjusting nodes, connections, or policies in the graph structure. This may provide a structured method for addressing conflicts based on the query results. It may lead to more efficient conflict resolution by focusing directly on the most affected elements in the graph.

According to some embodiments, resolving the identified conflicts may involve applying a mean value, a mathematical algorithm, historical data, machine learning, or other mechanisms for conflicting values. This may allow for a range of automated approaches to resolving conflicting policies. It may improve speed and accuracy of conflict resolution, minimizing manual intervention.

According to some embodiments, the conflict-free configuration may be applied to the target object of the target system. In this embodiment, the conflict-free configuration, once determined by resolving conflicting policies, may be applied to the target object of the target system, ensuring the target system operates in accordance with a consistent and optimized set of policies. This step involves translating the graph-based conflict resolution into real system changes, whereas the valid conflict-free configuration per representative entity is obtained via queries and applied to the target system and its real objects corresponding the representative entities, contributing to a technical management of the target system's behavior. The application of the conflict-free configuration to the target object may ensure seamless implementation of configurations without manual intervention, improving system functionality and stability.

According to some embodiments, the conflict-free configuration may be applied via an API or a management and orchestration interface for network elements, such as the O-RAN O1 interface. This may leverage existing network management protocols to implement configurations. This may streamline integration with standard network management frameworks, reducing complexity.

According to some embodiments, applying the conflict-free configuration may involve performing a delta update, where only the differences between the current and conflict-free configuration are applied. This may reduce the amount of data processed during updates. This may lead to faster updates and fewer disruptions to network services.

According to some embodiments, querying the graph database may involve using a machine learning algorithm trained on historical query and conflict resolution data to predict and optimize conflicts. This may add predictive intelligence to the conflict detection process. This may improve system efficiency by proactively identifying and resolving conflicts before they impact performance.

According to some embodiments, the system may manage multiple target objects, querying and resolving conflicts for each object to obtain conflict-free configurations for all objects. This may enable broader system-wide management of configurations. This may ensure uniform conflict resolution across the entire network.

According to some embodiments, the method may include generating a visual representation of the graph structure in a graphical user interface, allowing for interactive management and modification. This may makes managing the system more intuitive and user-friendly. This may allow operators to quickly identify and address issues through a visual interface.

According to some embodiments, the target system may be a mobile communications network, and the policies are network configuration policies. This may ensure that the method is applicable to complex systems like 4G, 5G, 6G networks, or beyond. This may enhance scalability and flexibility of mobile network management.

According to some embodiments, a policy node represents a set of rules governing the performance of a mobile network, a managed object node represents configuration settings for a network component, and a representative entity node identifies a network component. This may ensure a clear structure for managing mobile networks. This may improve control and efficiency in network configuration.

According to a further aspect of the present disclosure, a computer program is proposed, which includes instructions that, when executed, cause the processor to perform the steps of the method. This may enable automation of the method through software. This may reduce the need for manual operations in managing configurations.

According to another aspect of the present disclosure, an apparatus for managing a target system and configurations via a plurality of policies is proposed. The apparatus comprises a storage configured to store a graph structure of the target system in a graph database. Each of the plurality of policies is represented as a respective node in the graph structure and configures desired characteristics or behaviors of the system. At least one target object of the target system is represented as at least one node in the graph structure. Connections between nodes in the graph structure represent direct or indirect relationships between the plurality of policies and the target object. The apparatus includes a processor configured to query the graph database to identify conflicts between different policies affecting the target object, resolve the identified conflicts to obtain a conflict-free configuration of the target object, and modify the graph based on the conflict-free configuration. The proposed apparatus may allow for efficient management of policies and network components through hardware and software integration. It may provide real-time conflict resolution and system optimization.

Embodiments of the present disclosure relate a method and apparatus for managing complex system configurations via policies, for example, but not exclusively, within the context of 4G, 5G, 6G and ORAN-based RANs. Embodiments propose using a graph-based approach to represent network policies as nodes, with their interdependencies and relationships captured as connections or edges within a graph structure, and with labels and properties for nods and connections. The concept enables more dynamic and scalable management of network policies by representing the relationships between policies, managed objects, filter, features, versions and network components. The graph is stored in a graph database to allow for efficient querying and analysis, identifying direct and indirect dependencies between policies. By querying the graph, potential misconfigurations and policy conflicts can be detected and resolved, with adjustments made to parameters or by prioritizing certain policies, for example. Embodiments also include provisions for automatically adjusting and applying these policies in real-time to network components, ensuring optimal system performance.

### Brief description of the Figures

Some examples of apparatuses and/or methods will be described in the following by way of example only, and with reference to the accompanying figures, in which
- Fig. 1: shows a flowchart of a method for managing a system and configurations via policies according to an embodiment;
- Fig. 2A-C: show various example graphs;
- Fig. 3: shows a basic block diagram of an apparatus for managing a system and configurations via policies according to an embodiment;
- Fig. 4: shows an example graph with subgraphs, linked policies, feature nodes, and a type of misconfiguration;
- Fig. 5: shows example graphs with additional node types, missing connections (a type of misconfiguration), and more complex connections between nodes; and
- Fig. 6: shows a flowchart of a method for managing a system and configurations via policies according to a further embodiment.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Embodiments of the present disclosure aim at a special application of graphs for a holistic management of different and mostly independent configuration specifications. Depending on the implementation, primarily independent conjunctive and disjunctive specifications are indirectly connected to logical references of another (target) system via chains and links in order to manage properties of an overall system. In the following, the radio access network (RAN) is used as an example of a complex, heterogeneous system, but the present disclosure is generic.

'Policy is a set of rules that are used to manage and control the changing and/or maintaining of the state of one or more managed object. Intent is a simplified declarative goal policy' (John Strassner, 2003). In the context of the present disclosure, policies are specifications which can be of different nature, but indicate what or which properties/characteristics (of the system) should be achieved, or how properties/characteristics (of the target system) should be.

The RAN configuration may contain a very large number of complex network configuration policies. Polices are of diverse types, ranging from technical low-level parameter properties of software- and hardware components to abstract high-level business or environmental aspects.

Specific configuration policies exist for various reasons. Non-exhaustive examples are: specific hardware and software capabilities, functionalities and versions; different technologies (4G, 5G, 6G each with different releases; ); different components (antenna, baseband unit, server, router...); regulatory reasons (special areas like airports, military institutions, country borders...; and/or frequency usages, power emission); Services (Campus, Slicing, Voice, VPNs...), Energy Saving strategies (day, night, rush hour, commuting...); Optimizations (Traffic Steering or tilts for better performance...); blacklists (e.g. "no change allowed"); geographic-/infrastructure-related (tunnel, mountain, indoor, inner city...); mobility-related (user movement and thus cell handover static, slow, fast, highway, railway, airplane...); temporary event specific tuning/workaround (concerts, sport events, extreme weather conditions, accidents/attacks...); specific user/devices types (loT, premium, roaming, converged connectivity with Wi-Fi or others...); coverage and quality goals or obligations (low latency, high bandwidth, robustness...) etc.

In a simplified view, a mobile network cell has a specific configuration which is the result of various impacting factors, and whereas the cell also contains subcomponents, and whereas the mobile network consists of a large number of cells and other components (backhaul connection, routers, Core Network, aggregation points, Edge Computing Data Center/Server etc.) , whereas each might come from different vendors, have different software versions and features, have an own lifecycle, and various other impacting factors. Therefore, the entire mobile network is prone to errors among others due to mismatching configurations, misconfiguration, and reconfigurations due to various factors.

Embodiments of the present disclosure propose to interconnect all these "factors" as policies in a graph and graph database, while analytics can be applied via queries (thus revealing very indirect interconnections) in manual and/or automated proceedings. The complexity of the overall configuration lies among other reasons in the combinatory explosion, since often certain configurations should apply for certain cells. Another reason is the level of abstraction, since impacting factors have to be modelled for appropriate interconnections (which might be long chains and additional intermediate steps). Also, the network/system itself is constantly evolving, e.g. new hardware/software/functionalities and/or new services and/or Al-based changes in an ever faster way (technological and societal progress), including real-time closed loops, renders the configuration management (governance) too complex for current approaches.

Policy management tools usually store and compare policies in a non-graph database, and in languages such as OPA (Open Policy Agent) and XACML (eXtensible Access Control Markup Language), which are both policy management tools or frameworks used to define, enforce, and manage policies. Problems arise when several policies impact to the same cell and/or parameter, and when different parameter implicitly impact the overall performance. Also unwanted parameter overwriting, back-and-forth reconfigurations and bottlenecks (underperforming parts) have a negative impact, which can result in a downgraded mobile network connectivity, less good coverage, bad customer experience and/or network outages (e.g. due to wrong configurations). OPA and XACML are designed to manage and enforce policies but can struggle in environments where policies are complex, interdependent, and involve implicit relationships between parameters (such as in a mobile network). Both frameworks require explicit definition of policies, but they may not handle dynamic or cascading policy interactions effectively without manual intervention or advanced logic, leading to conflicts and unintended side effects in network performance or worse: outages. OPA and XACML enforce policies in a deterministic manner. However, if multiple policies are applied to the same parameter (e.g., bandwidth allocation in a mobile network), these frameworks might not inherently detect the back-and-forth changes or their cascading impact. This could result in conflicting configurations that degrade the system's performance, which OPA or XACML might not automatically resolve without additional conflict resolution mechanisms.

Knowing and detecting dependencies is complicated, yet crucial for efficient network management. It is important to reveal and circumvent as many impacts as possible beforehand (before the configuration is in use) instead of when it is too late (analytics of performance, assurance systems, detection of problems). While most network optimization and/or Al-supported approaches in the literature include performance measurements and metrics, embodiments of the present disclosure focus on keeping control of the policies and governance of the (aimed) network configuration. Nevertheless, this does not exclude the combination with closed loops, Al, or other sources of configuration changes.

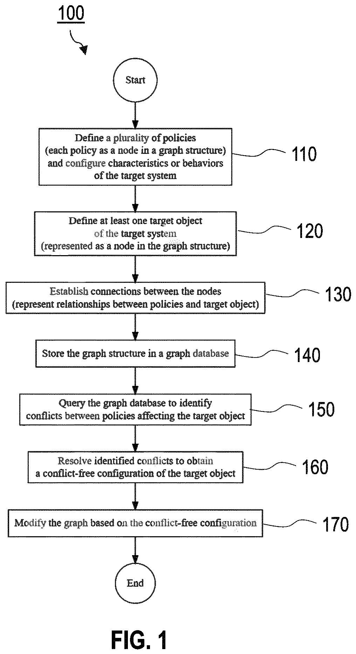

**Fig. 1** schematically illustrates a flowchart of a method 100 for managing a target system and configurations via policies according to an embodiment of the present disclosure.

The target system in the context of method 100 for managing configurations via policies may refer to various complex systems where multiple policies are applied to manage various components and its operations. For example, the target system could be a 4G or 5G RAN, where policies control aspects such as bandwidth allocation, handover procedures, and power management for base stations and antennas. Another example could be an enterprise cloud infrastructure, where policies govern the allocation of virtual machines, storage resources, and security protocols across different data centers. Additionally, the target system may encompass industrial loT networks, where policies manage the communication and coordination of sensors, controllers, and actuators in a manufacturing environment. Target systems can also be (connected) airplanes, (connected) vehicles, power plants, Al training systems (managing data and data sources), Smart Cities (traffic lights, heating, water, power etc), scientific research systems e.g. for quantum physics, and various other types of complex systems.

In all these scenarios, managing configurations efficiently and resolving potential conflicts between policies is needed to maintaining system performance and reliability.

Method 100 may be a computer-implemented method. This means that method 100 may be designed to be carried out by a computer system. That is, steps in method 100 can be executed using software and hardware components, typically by running a computer program that automates the application and management of policies in a system.

Method 100 includes defining 110 a plurality of policies and representing each policy as a respective node in a graph structure. Defining can typically be importing and maybe adapting existing policies from other tools, but may also be the manual or Al-supported modelling. Each policy (node) defines or configures desired characteristics or behaviors of the target system. In act 110, a number of policies may be created or defined, with each policy being represented as a node in a graph structure. Instead of representing policies in a traditional list or table, method 100 may organize them as nodes within a graph. In this graph, nodes may correspond to a respective policy. The graph may provide a way to visualize and understand the relationships between these policies. Each policy, or node, may outline certain characteristics or behaviors that the system or a part thereof should follow or achieve, which could include performance goals, operational rules, or configuration requirements. In essence, act 110 may involve establishing the rules or guidelines that govern how the (target) system should operate, and these rules may be expressed as nodes in a graph to allow for better management, interaction, and analysis of how the policies influence the system as a whole.

In the context of a RAN, act 110 of defining policies as nodes in a graph may provide a more dynamic and flexible way to manage the complex configurations and behaviors required for network operation. Each policy, which may control aspects such as bandwidth allocation, handover protocols, or power management, may be represented as an individual node within this graph. Instead of using a static list or table, where policies are listed in isolation, the graph allows these policies to be visualized as interconnected nodes that define the desired characteristics or behaviors of the network.

The policy nodes may define specific performance goals, operational rules, or configuration settings that govern various parts of the RAN. For example, a policy might specify how certain cells should prioritize traffic during peak usage, or how energy-saving measures should be applied to base stations during low-traffic periods. By representing each policy as a node, it becomes easier to see how these policies interact, potentially conflict, or influence one another. It a key aspect of embodiments of the present disclosure that very indirect relations can be revealed via a well-modelled graph.

This graph-based approach may allow for a more sophisticated understanding of the relationships between policies and how they impact the network as a whole. For instance, a policy governing energy efficiency may be linked to a policy controlling service quality, as reducing power in certain cells could impact the user experience. The graph could provide network operators with a visual and analytical tool to manage these interdependencies, ensuring that the policies applied across the network work in harmony.

Method 100 further includes defining 120 at least one target object of the target system, wherein the target object is represented as at least one node in the graph. This means that, as part of the method 100, physical or logical elements of the target system may be identified and modeled. These elements, referred to as target objects, could include devices, components, or functional units within the target system, such as a cells in a mobile network, a virtual reality object or a server in a cloud environment. Once these target objects are defined, they are represented within a graph as nodes. This means that each object may be treated as a distinct entity within the graph, allowing it to be connected to other elements like policies. The graph is a visual and data-driven way to map out how various parts of the system, including the policies and target objects, are related to one another. By representing target objects as nodes, the (computer) system can better manage configurations and resolve interdependencies or conflicts between policies and the components they control. It also allows verifying data, relations and configurations in a similar way to inventory systems.

In the context of a RAN, act 120 may refer to identifying and representing network components within the RAN. These target objects might include elements such as cells, radio units, CUs, Dus or (virtualized) network functions. Each of these target objects is represented as a node in a graph, which allows them to be visually and logically organized in relation to other nodes, such as policy nodes. The graph structure helps in the governance, keeping control and understanding - for humans and AI - how each network component interacts with policies that control its behavior, such as bandwidth allocation, power management, or handover protocols. In this way, by representing the physical or logical components of the RAN as nodes, the system can efficiently manage and optimize how policies are applied across the network, ensuring that configurations are aligned with operational goals.

Method 100 further includes establishing 130 connections between nodes in the graph. The connections may represent direct or indirect relationships between the plurality of policies and the target object. This means that method 100 involves creating links within the graph structure that manage and show how different nodes, such as policies and target objects, are related. These connections indicate whether a policy directly affects a target object (such as a cell in a RAN) or whether the influence is more indirect-for example, when one policy indirectly impacts a target object through another policy, managed object or further node(s). In this way, the connections define how policies interact with and influence the behavior of target objects within the system. A direct relationship could involve a policy immediately setting parameters for a base station, like bandwidth allocation. An indirect relationship might occur if one policy modifies another policy, which in turn influences the same target object. These connections allow the system to map out and manage the complex interactions between various policies and the components of the network, making it easier to identify potential conflicts and optimize configurations. It may also help to detect missing or unwanted connections and/or configuration.

In the context of a RAN, this may refer to mapping out how different policies interact with specific network components, such as cells, CUs, DUs, or virtual network functions. These connections help define how each policy affects the operation and configuration of the RAN components. A direct relationship in the RAN might involve a policy that immediately controls a network element, such as a policy regulating the transmission power of an antenna. An indirect relationship could occur when one policy influences another policy, which then impacts the same RAN element. For instance, a policy controlling traffic load balancing may indirectly affect bandwidth allocation policies that govern the performance of specific base stations. By establishing these connections, the system can create a comprehensive map of how policies influence RAN components, both directly and through other intermediary policies. This makes it easier to identify potential interactions, dependencies, or conflicts between policies, ensuring the RAN operates efficiently and without issues stemming from wrong or conflicting configurations.

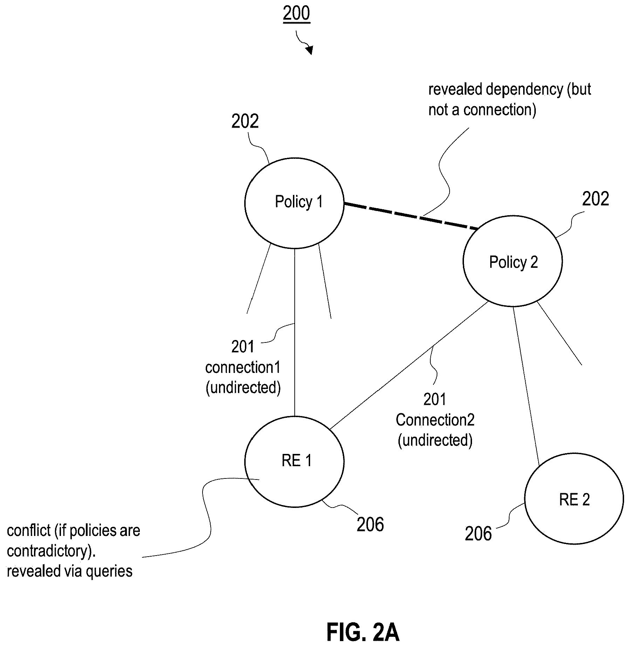

A resulting simple graph (structure) 200 is schematically shown in **Fig. 2A****.** Nodes of graph 200 comprise policy nodes 202 and representative entity (RE) nodes 206. A policy node 202 includes one or more policies defining desired characteristics or behaviors of a part of the target system. A RE node 206 comprises an identifier of a physical or logical target object of a part of the target system which can be configured or controlled through associated managed objects. The nodes 202, 206 are connected through connections 201 that represent relationships between them. It is a key aspect of embodiments of the present disclosure that the performance of graph databases (compared to traditional table-based databases with joins between tables) enables much faster or even near real-time analysis, conflict verifications, evaluations and application of changes to the RAN.

The example graph 200 depicted in Fig. 2A comprises two policy nodes 202 and two RE nodes 206, which illustrate relationships between various policies and identifying representations of physical or logical components of a target system. A first policy node 202, identified as Policy 1, is connected to a first RE node 206, RE 1, which represents a first physical or logical object in the target system, such as a cell or network function in a RAN. The connection 201 between Policy 1 and RE 1 indicates that Policy 1 directly influences or configures RE 1, applying specific rules or behaviors to that entity. Policy 2, a second policy node 202, is also connected to RE 1, indicating that this policy similarly governs or affects the same RE. This dual connection to RE 1 suggests that both policies are applied to the same network component, which can potentially create conflicts if the policies are contradictory in their configurations or behaviors. Additionally, Policy 2 is connected to a second RE node 206, RE 2. The second connection 201 signifies that Policy 2 not only affects RE 1, but it also extends its influence to another entity, RE 2. This configuration means that Policy 2 has a broader scope, impacting multiple network components or functions.

In the example graph 200 of Fig. 2A, the connections 201 between the nodes 202, 206 are undirected, meaning that the relationships between the policies and representative entities are not hierarchical but rather indicate mutual influence or application. Additionally, a dashed line between Policy 1 and Policy 2 represents a dependency that can be revealed via graph queries with embodiments of the present disclosure. While this is not a direct connection between the two policies, the dashed line indicates that these policies may have an indirect relationship, e.g., through their shared influence on RE 1. Nevertheless the dashed line may be modelled as result of a detected influence, and/or in order to manage the potential conflict between policies.

Fig. 2A also highlights the potential for conflicts, particularly where Policy 1 and Policy 2 interact with the same representative entity, RE 1. If the two policies impose conflicting configurations (for example, setting different transmission power levels), method 100 could detect these conflicts via querying the graph 200 (as described further below). The graph 200 may serves as a tool to model, manage, govern and visualize these relationships, allowing the (computer) system to analyze dependencies, resolve conflicts, and ensure that the configurations applied to the (target) network components are aligned and consistent.

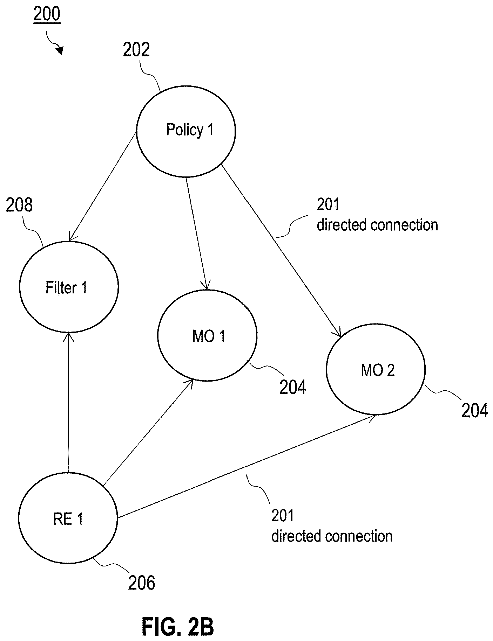

As shown in **Fig. 2B****,** nodes of the graph 200 may optionally comprise, further to policy nodes 202 and RE nodes 206, managed object (MO) nodes 204 as well as filter nodes 208. An MO node 204 may comprise parameters and attributes for controlling or managing a physical or logical target object represented by a RE node 206. A filter node 208 may be used to select or group specific target objects based on predefined criteria for targeted application of policies. A filter node 208 may have a direct or indirect connection to a policy node 202 and a RE node 206. This direct or indirect connection may define rules or configurations conditioning the connection which may have an impact if or how the application of the configuration to a target system. Further, the direct or indirect connection may define rules or configurations conditioning if or how an implementation or application of policies of the policy node 202 is applied to a target system.

The optional additional MO nodes 204 and filter nodes 208 may serve specific purposes in managing and controlling the target system. An MO node 204 may represent the parameters and attributes necessary to manage or control a physical or logical object within the target system. For instance, if an RE node 206 represents a cell in a 5G RAN, the corresponding MO node 204 may include configuration details such as transmission power, frequency allocation, or bandwidth limits. The MO node 204 may link the policies defined in the graph to the actual network components, enabling the (computer) system to control and adjust the network's behavior according to the set policies. A policy node 202 may be related to a MO node 204 by defining rules or configurations that the related MO implements or applies to a specific physical or logical object. Alternatively, and depending on the modelling and implementation of embodiments of the present disclosure, the MO node my only be connected to a policy node, and the policy node connected to a RE node, which means the parameters of the MO node can still be appled to a RE node since it's associated via an indirect connection.

An MO contains parameters and attributes that describe how this element should operate (e.g., bandwidth allocation, power levels, or handover thresholds). The MO provides a template for managing and controlling specific entities. For example, just as a class in programming can be used to create multiple objects with shared characteristics but different values for attributes, an MO defines a standard structure for handling multiple network components, each potentially having different operational parameters.

A filter node 208 may function by allowing the (computer) system to select or group specific target objects based on predetermined criteria, which may involve characteristics such as geographic location, service type, or traffic load. The purpose of a filter node 208 is to ensure that the application of policies is targeted, meaning that specific policies are applied to a relevant subset of network components that meet the filter's criteria.

In Fig. 2B, the connections 201 between the nodes in the graph 200 (whether direct or indirect) are used for determining the relationships and influence between nodes. A filter node 208, for example, might be directly linked to a policy node 202 and an RE node 206, representing a straightforward relationship between policies and network objects. However, an indirect connection might involve an intermediary node (such as an MO node 204), meaning that the filter may condition impact the policy's implementation through another layer. Additionally, the connections 201 between nodes may include specific rules or configurations that condition the relationship. These rules may define under what conditions the policies or filters apply. For instance, a policy might only take effect during specific times of day, a certain geographic area, or it might be conditioned by a certain service definition r. Similarly, the connection 201 could influence how policies are applied, ensuring that configurations are adapted to the specific network components.

The graph 200 shown in Fig. 2B represents a more detailed structure that includes policy nodes 202, filter nodes 208, MO nodes 204, and RE nodes 206, each connected by directed connections 201. At the top of the graph is Policy 1, a policy node 202 that may define rules or behaviors for part of the target system. Policy 1 has a directed connection to MO 1. This directed connection 201 indicates that Policy 1 directly uses, influences or controls the behavior of MO 1, which is an MO responsible for managing parameters or configurations related to the network's physical or logical elements. MO 1 is also connected to RE 1, a RE node 206, meaning that MO 1 controls some aspect of the physical or logical target object represented by RE 1, such as a cell or a virtualized network function in a RAN. The directed connection 201 between RE 1 and MO 1 indicates that RE 1 uses or depends on the parameters and attributes of MO 1.

Additionally, Policy 1 is connected to MO 2 via a directed connection 201. That is, Policy 1 not only directly uses/influences MO 1 but also has a directed connection to MO 2. This means that Policy 1 is responsible for using, controlling or influencing certain parameters or behaviors of MO 2. The directed connection 201 from Policy 1 to MO 2 illustrates a direct relationship where the Policy 1 defines rules or configurations that impact the management of the target object controlled by MO 2. Similarly, connection between RE 1 and MO 2 through a directed connection means that RE 1, which represents a physical or logical object in the system, is also using and dependent on MO 2. This dependence may involve specific configurations or attributes that MO 2 applies to RE 1. The fact that RE 1 is connected to MO 2 via a directed connection suggests that the behavior of RE 1 is managed or conditioned by the attributes and configurations in MO 2.

In this graph, the combination of connections between Policy 1, MO 2, and RE 1 indicates a layered structure of control. Policy 1 uses and/or establishes the rules that govern both MO 1 and MO 2, and RE 1 is influenced by the parameters managed by MO 1 and MO 2. The directed connections provide a clear path of influence from the policy down to the network component, showing how policies and managed objects work together to control specific behaviors or configurations in the target system. This structured approach allows for finegrained control over network components, ensuring that each element operates according to the policies defined within the system.

Filter 1, which is connected to Policy 1 and RE 1, may serve as a mechanism to select or group specific target objects based on predefined criteria. The connection between Filter 1 and RE 1 suggests that Filter 1 plays a role in applying Policy 1 specifically to RE 1 based on certain conditions, such as geographic location, load, or network type. This selective filtering may ensure that Policy 1 is applied only to the intended network components, allowing for more precise management and optimization of the target system.

The directed connections in Fig. 2B define the flow of control and influence between the nodes. Unlike undirected connections, which may suggest a mutual or reciprocal relationship, directed connections in this graph may explicitly show that one node (for example, Policy 1) influences or controls another node (such as MO 1), establishing a clear hierarchy and flow of configuration rules through the system. These connections 201 may ensure that the policies are applied in a structured and logical sequence, from policy definition down to the specific network components they affect.

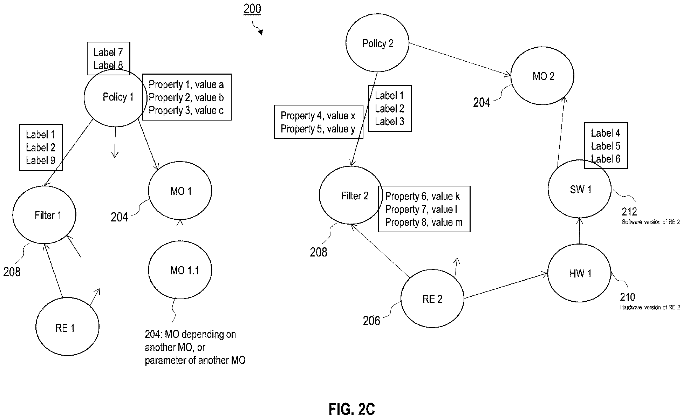

The example graph 200 depicted in **Fig. 2C** shows a more intricate variant of the target system, also including subordinate managed objects (sub-MOs), independent sub-graphs (left sub-graph, right sub-graph), and version nodes 210, 212 for hardware (HW) and software (SW) components. Fig. 2C visualizes how multiple sub-graphs can coexist within the overall target system, yet contribute to a unified configuration for the target system when the respective data is obtained (queried) from the graph and applied to the target system. The use of multiple sub-graphs implies that different portions of the network or system may be managed independently, but they may be ultimately combined to create a consistent operational configuration. It may also imply that not all REs and/or policies must be connected. This depends on the individual modelling, domain, usage and implementation of embodiments of the present disclosure. Simple, independent and very complex systems can be entirely modelled, managed and governed via the graph-based embodiments.

In the left sub-graph of Fig. 2C, Policy 1 is connected to MO 1, which is further connected to MO 1.1. This indicates a hierarchical dependency between MOs, where MO 1.1 may depend on the configurations or parameters defined in MO 1. Policy 1 is marked with various properties and attributes (such as "Property 1, value a"), which may define how Policy 1 influences the system. These properties may represent operational settings like bandwidth allocation or processing power in a telecommunications system like a RAN. The hierarchy and maybe interlinked structure of several MOs may also depend on specifications like 3GPP for mobile networks, but also on hardware and software of technical (target) systems which are managed via embodiments of the present disclosure.

Policy 1 is also connected to Filter 1, which is linked to RE 1. The directed connection between Policy 1 and Filter 1 includes labels (such as "Label 1, Label 2"), which may define criteria for selecting or grouping specific target objects, and/or allow the fine-granular retrieval of information form the graph. Filter 1 may ensure that Policy 1 is applied only to certain network components that meet predefined conditions. The connection between Policy 1 and Filter 1 indicates that Policy 1 is not applied uniformly across all network components, but rather is filtered or conditioned before it is applied to specific REs, such as RE 1. Filter 1 serves as an intermediary that selects or groups certain target objects based on predefined criteria. The labels associated with the connection between Policy 1 and Filter 1 (for example, "Label 1" and "Label 2") may be used for specifying these criteria. The labels may help define the conditions or categories under which Policy 1 applies. For instance, the labels could refer to characteristics like geographic location, timing, versioning or priority, indicating that Policy 1 is only relevant at certain times and/or to certain parts of the network that match these labels. Filter 1 may use these labels to determine which network components, such as RE 1, should receive the policy's configurations.

In the right sub-graph, Policy 2 is connected to MO 2. MO 2 is dependent on both the hardware and software configurations of this part of the target system, as indicated by its connections to SW 1 (software) and HW 1 (hardware). Both SW 1 and HW 1 are shown by version nodes, specifically HW version node 210 and SW version node 212, which may identify the hardware and software versions currently active in this part of the target system. These version nodes 210, 212 may be used for managing different hardware or software setups in the network, ensuring that configurations are properly applied to the correct versions of the devices. It can also help to verify the current status of the components of target system.

Policy 2 is connected to RE 2 through an intermediary node, Filter 2. The connection between Policy 2 and Filter 2 indicates that the application of Policy 2 is not direct but rather conditioned by Filter 2. Filter 2 uses specific criteria, defined by its associated properties (such as "Property 6, value k" and "Property 7, value I"), to determine which network components, such as RE 2, should receive the policy's configurations. This means that Filter 2 may selectively apply Policy 2 to RE 2 based on predefined conditions, such as operational state, timing, versioning, priority, or network capacity, ensuring that the policy's rules are implemented only on components that meet the necessary criteria.

Once Policy 2 is filtered, it may be applied to RE 2, a representative entity that could represent a physical or logical network component, such as a cell or virtual network function in a RAN. A connection between RE 2 and HW 1 indicates that RE 2 may be linked to a specific hardware version in the system. This relationship is further clarified by the directed connection between RE 2 and HW 1, showing that the configuration or behavior of RE 2 depends on the hardware version managed by HW 1. The directed connection between RE 2 and HW 1 may suggest that the physical or logical object represented by RE 2 is influenced by the characteristics or capabilities of the hardware version represented by HW 1. For example, HW 1 could represent a particular base station hardware, and the behavior of RE 2 would need to be adjusted or configured based on the specifications or limitations of that hardware version.

The sub-graphs (seen with RE 1 and RE 2) may represent independently managed sections of the overall target system. Each sub-graph may operate autonomously but may be integrated into the larger configuration to ensure that the entire target system is managed consistently and operates overall as defined by the policies. For example, Filter 2, connected to Policy 2, may play a role similar to Filter 1, defining which specific components are subject to the policy's rules. Filter 2 is connected to RE 2, influencing how Policy 2 affects the network components represented by RE 2. In a radio network, configuration policies for one cell may be independent from configuration policies for another cell, thus independent graphs, yet the overall network configuration and operation of both cells (e.g. optimal coverage, or independent slices) is as intended.

The efficient configuration management including changes to be applied to a MO node (or any other node) can be achieved via automatic verifications of via graph queries, and then, if approved, automatically update the corresponding physical or logical component of the target system via the identifying representative entity node. It is also possible to have policies which create MOs in the target system, a common practise for features in radio networks. These new MOs can be modelled in the graph, and respective commands for MO creation (or deletion, or adaptation) can be part of the policies.

Preferably, identifying references of logical and/or physical elements (e.g. radio units, base stations which usually house several cells, routers, etc.) may also be mapped in the graph 200 - each with their respective MOs and possibly as a subgraph - and correctly connected to the overall graph with the relevant MOs. 'Correct' means above all that the right hardware, software, component, configuration, etc. versions may be used and that invalid relations can be identified. 'Correct' also means that a valid configuration can be created from the graph or subgraph of a (referenced) logical and/or physical element, e.g. by means of suitable query(s) to the overall graph or subgraph and using the information stored in the subgraph. `Use' means "apply to the logical and/or physical element(s)", i.e. provision or configure (usually via interfaces).

'Correct' does not necessarily mean that the data stored in the overall graph or subgraph must be complete in the sense of "all data necessary for proper operation", but depends on the configuration and utilization of embodiments. Typically, HW/SW lift standard configurations (default parameters) which are adapted or individualized and/or optimized during use.

'Correct' also does not mean that there are "only correct", i.e. functioning, and/or "only useful", i.e. usable, configurations in the graph or "with the graph" or with embodiments. It is the purpose of embodiments of the present disclosure to automatically find, manage, change and/or improve specific overall configurations and/or configurations per (referenced) logical and/or physical element from the overall graph.

Turning back to Fig.1, method 100 further includes storing 140 the graph (structure) 200 in a graph database. That is, the graph 200, which comprises nodes (at least representing policies and target objects) and their connections (representing relationships between nodes), may be saved in a specialized type of database known as a graph database. A graph database is designed to store and manage data in the form of graphs, where data entities (such as policies) are represented as nodes, and their relationships are represented as edges or connections. This type of database is optimized for fast and efficiently querying and analyzing relationships between nodes and obtaining the targeted data of the nodes and/or connections for further analytics and application to a target system, making it wellsuited for scenarios involving complex interconnected data such as policies and their application to certain network elements. In the context of method 100, the graph database allows for efficient storage, retrieval, and querying of the policies and their relationships and obtaining the targeted data, enabling better management and analysis of the system.

"System" means in this case the whished overall behavior of the target system (for example a radio network), which is defined by the method of embodiments of the present disclosure, which is a graph containing all elements (nodes and their connections, policies etc). The fact that the entire (whished and conflict-free) configuration of the target system is in the method of embodiments of the present disclosure, allows managing and analyzing as well the real target system, and as well embodiments of the present disclosure, whereas the latter can be considered as a Digital Configuration Twin of the target system.

Examples of graph databases include Neo4j, Amazon Neptune, ArangoDB, Janus Graph and Azure Cosmos DB (with Gremlin API). Often these databases have specialized queries and algorithms for specific graph operations, which may be used within embodiments of the present disclosure. These databases may be used in systems or applications that require the management of complex relationships, such as social networks, recommendation engines, airplanes, vehicles, power plants, AI training systems, Smart Cities, scientific research systems or network configuration management systems, like the one described in method 100. By using a graph database, the method benefits from faster querying of relationships and more efficient handling of the interdependencies between policies.

Method 100 further includes querying 150 the graph database to identify conflicts between different nodes/policies affecting the target object. Here, the relationships between various nodes/policies that are applied to a particular target object may be analyzed. In this context, a target object could be a physical or logical component of the system, such as a cell or a virtualized network function in a RAN. The system may store policies, managed objects, and relationships between them as nodes and connections in a graph database. Querying this database may involve searching through the nodes (which represent policies and network components) and connections (which define how these policies and components relate) to detect potential issues or conflicts. A conflict may arise when two or more policies impose contradictory configurations on the same target object. For example, one policy might attempt to increase the transmission power of a base station, while another policy might try to reduce it for energy-saving purposes. By querying the graph database, the system can automatically identify these conflicts before they negatively impact the network's performance. The query may examine how the policies are connected to the target object, the parameters they control, and whether their settings align or clash.

Searching or querying the database also allows to uncover missing, unwanted and/or unnecessary relationships, for example due to wrong modelling or importing. The analytics of the query results also allows to change and optimize (any element of) the graph and thus the configuration and behavior of the target system. Embodiments of the present disclosure may thus enable the governance of (target) systems, reducing errors and keeping control of complex systems. Additionally, further data can be integrated into the graph, preferably as subgraph, such as external factors, measured data and/or connections to other graphs which might be used for other purposes, for example as inventory or root cause analytics.

Querying 150 the graph database may comprise traversing the graph 200 starting from a node while considering labels and conditions associated with nodes 202, 204, 206, 208 and connections 201 of the graph 200 that may affect query results. Then, query results may be obtained that contain data objects associated with nodes and/or connections of the graph 200.

Traversing the graph 200 starting from a node means that a query may be initiated from a specific starting point, which could be a policy node 202, an MO node 204, or a RE node 206 in the target network, for example. From this starting point, the (computer) system may explore the connected nodes and relationships in the graph 200, examining how the different components interact. While traversing the graph 200, the (computer) system may take into account labels and conditions associated with both the nodes (such as policies or objects) and the connections 201 (the relationships between them). These labels could include identifiers, such as operational conditions, timing, logical, set-theoretical conditions, geographical locations, or service types, which help determine the relevance of certain nodes or connections to the query. The conditions may define rules that impact how policies are applied or how nodes interact with one another, such as time-based restrictions or priority levels. As the graph 200 is traversed, relevant data objects may be collected that are associated with these nodes and connections. The data objects may include attributes such as configuration parameters or performance metrics, which are essential for understanding how the policies and managed objects are operating or interacting within the system.

For example, one may start querying from a policy node 202 that governs the bandwidth allocation for a set of base stations. This policy node 202 may be connected to several RE nodes 206, each representing a different cells. As the system traverses the graph 200, it may check the labels associated with the policy node 202, such as geographic location or priority level. These labels help the system determine whether the policy applies to specific cells in the network. As the (computer) system moves through the graph 200, it also considers conditions attached to the connections 201 between the nodes. For example, there could be a time-based condition that limits when the policy applies, such as only during peak traffic hours. As it traverses these connections, the (computer) system gathers relevant data objects, such as current bandwidth settings, usage statistics, or constraints imposed by other policies. Finally, the query results may return data about the specific base stations affected by the bandwidth allocation policy, as well as any conflicting policies that might be applied, such as an energy-saving policy trying to reduce the power at those same base stations. By analyzing the results, the (computer) system can detect if there is a conflict between policies and take action to resolve it.

In some example implementations, querying 150 the graph database may be based on a query language, wherein a query is configured to identify nodes or edges governed by conflicting policies. Querying 150 the graph database based on a query language may involve using a specialized syntax designed to interact with the structure of the graph and retrieve relevant data about the policies and their relationships. The query language could allow the system to search for specific conditions, such as potential conflicts between policies, dependencies between nodes, or inefficiencies in the network configuration. By crafting queries that target these aspects of the graph, network operators or automated systems may extract valuable insights that help optimize the management of the target system. The query process may rely on graph-specific languages that are optimized for navigating nodes and edges. For example, Cypher, used in Neo4j databases, allows for the exploration of connections and properties of nodes, such as finding all policies that influence a specific network component. Gremlin is another example, which may be used in graph databases like Amazon Neptune or Azure Cosmos DB. It could enable more complex traversals, such as identifying all indirect dependencies between policies that share a common resource, like a frequency band.

The query language may support pattern matching and property filtering, allowing the system to define rules for identifying conflicts or dependencies. For instance, a query might ask for all policy nodes connected to a certain managed object node where their configurations conflict, based on pre-defined rules in the system. This could help to quickly pinpoint areas where policy adjustments are necessary and/or the graph (nodes and connections) need adjustments. By using a graph query language, the system may efficiently navigate the relationships between nodes/policies and ensure that the target system is configured optimally. The ability to run specific and detailed queries may allow for better management, conflict detection, and dynamic adaptation to network changes, ultimately improving performance and reducing the likelihood of misconfigurations.

Analyzing the graph 200 to detect potential conflicts may be done through a combination of automated queries and conflict detection algorithms that examine the relationships and dependencies between the various nodes. The graph 200 may allow the system to map out how different nodes (e.g., policies) interact with each other and where their effects overlap.

For instance, a query process could identify when two policies target the same network element, such as a cell, but prescribe conflicting configurations, such as different power levels or bandwidth allocations.

To achieve this, rule-based algorithms may be used that evaluate specific conditions under which conflicts are likely to arise. These algorithms may compare the parameters set by different policies, looking for discrepancies such as opposing values for key network attributes. For example, one policy might aim to increase bandwidth for enhanced user experience, while another policy could simultaneously attempt to reduce bandwidth for energy-saving purposes, leading to a conflict that needs resolution.

Additionally or alternatively, graph traversal techniques may be employed to trace both direct and indirect dependencies between nodes, identifying where changes to one policy might have a cascading effect on others. One example is Depth-First Search (DFS), which explores a graph by moving as deeply as possible along one branch before backtracking. This method could be useful in scenarios where the system needs to explore long chains of policy dependencies in a 5G RAN to understand how a change in one policy might propagate through indirect connections. Another example is Breadth-First Search (BFS), which explores nodes level by level, making it effective for finding the shortest path between two nodes or for identifying immediate conflicts between policies that might be connected through the same managed objects or network elements. This could be particularly useful in quickly identifying conflicts in real-time configurations. Additionally, Dijkstra's algorithm could be used for finding the most efficient path between two nodes, taking into account weighted connections between policies, such as varying priorities or resource costs. These algorithms may allow the system to find optimal ways to resolve conflicts or achieve balanced configurations in the network. By applying such traversal algorithms, the system may ensure efficient and systematic analysis of the graph, allowing for more informed decisions in managing complex relationships within the RAN.

Method 100 further includes resolving 160 the identified conflicts to obtain a conflict-free configuration of the target object. A conflict occurs when multiple policies attempt to impose contradictory configurations on the same target object. For example, one policy might try to increase the bandwidth of a base station, while another policy aims to reduce it for energy-saving purposes. These conflicting instructions can degrade network performance or lead to improper behavior in the target object, such as a cell operating inefficiently, unpredictably or not at all. Resolving 150 the conflicts means that the system may analyze the conflicting policies and makes adjustments to ensure that the resulting configuration is consistent and does not cause operational issues for the target object. The (computer) system may resolve these conflicts by modifying the parameters of one or more policies, applying priority rules to determine which policy should take precedence, or finding a compromise configuration that satisfies the objectives of both policies. Once the conflicts are resolved, the system may create a conflict-free configuration that defines how the target object should behave. This configuration may align (all) relevant policies so that they can coexist without causing interference, ensuring the target object operates in a stable and optimal manner. In the context of a RAN, this means that all network components are configured in a way that allows the network to function efficiently without contradictory instructions disrupting the service.

Resolving 160 the identified conflicts may comprise analyzing the query results to identify potential dependencies and/or conflicts arising from several different policies applied to the same physical or logical target object, and resolving the identified conflicts by adjusting at least one of the nodes, connections, labels, properties or policies of the graph structure. The query results may reveal whether there are any dependencies (where one policy is reliant on the outcome of another) or conflicts (where policies impose contradictory configurations) among the policies that govern the same (referenced) physical or logical network element, such as a cell, antenna, or virtual network function in a RAN. For example, one policy may aim to reduce power consumption at a base station, while another might try to increase transmission power for better coverage. Once the conflicts or dependencies are identified, the system may proceed to resolve them by adjusting elements within the graph 200. This resolution can involve modifying one or more nodes (representing policies or managed objects), connections (defining the relationships between nodes), labels, properties of nodes or relations, or the policies themselves. Adjustments may include altering policy parameters, reconfiguring the relationships between nodes to reflect new priorities, or redefining the conditions under which certain policies apply. The result of this process may be a conflict-free configuration, where all policies work in harmony without causing operational disruptions to the target object. This ensures that the system operates smoothly, without contradictory instructions, and maintains optimal performance across the network.

Resolving 160 the identified conflicts may comprise applying at least one of a mean value, a mathematical algorithm, historical data, machine learning and/or other mechanisms for conflicting values. When conflicts arise-such as two policies assigning different values to the same parameter (for example, different power levels for a base station)-the system can apply different techniques to determine the best resolution. One approach is to use a mean value, where the system calculates an average between the conflicting values to arrive at a balanced solution. Alternatively, the system might apply a mathematical algorithm designed to optimize the parameter settings based on certain criteria, such as network performance or resource efficiency. Another method involves using historical data, where the system may review previous configurations and outcomes to guide the resolution process. By analyzing how similar conflicts were resolved in the past, the system can make data-driven adjustments that are likely to produce favorable results. Additionally, the system may employ machine learning, where algorithm may analyze patterns in the data to predict the optimal settings. Machine learning models, trained on historical conflict resolution data, can help the system automatically identify and implement the best solution to conflicting policy values.

In some example implementations, resolving 160 the identified conflicts may comprise modifying one or more parameters and attributes associated with the policies. This may involve adjusting specific settings within the policies that are causing the conflict. This process could be done manually by network operators or automatically by the system, depending on the complexity, domain, implementation and urgency of the situation. In a RAN, policies govern various network behaviors, such as resource allocation, handover procedures, and quality-of-service (QoS) settings, which may interact or conflict under certain conditions. When a conflict is detected, the system might review the parameters involved-such as bandwidth limits, power levels, or latency thresholds-and determine which ones need to be adjusted to resolve the issue. For instance, if two policies are conflicting over how much bandwidth to allocate to a particular cell, the system could adjust the parameters to ensure one policy takes priority under specific network conditions, or find a balanced compromise between them. Additionally, the system may alter attributes that define how policies behave in different contexts. For example, a policy governing energy saving might be modified to apply only during off-peak hours, thereby avoiding conflict with a performance-related policy that demands higher resources during periods of high traffic. These changes may involve updating thresholds, altering time-based triggers, or adjusting prioritization rules.

In some example implementations, resolving 160 the identified conflicts may comprise assigning a priority level to each policy and adjusting the policies based on the assigned priority levels. This may involve establishing a hierarchy or order of importance for the policies that govern the RAN. Each policy could be evaluated based on its impact on network performance, user experience, or operational goals, and a priority level may be assigned accordingly. For instance, policies related to emergency communication or critical service continuity might be given higher priority over policies focused on energy efficiency or noncritical data traffic management. Once the priority levels are assigned, the system could adjust how policies are applied in situations where conflicts arise. If two policies conflictsuch as one aiming to conserve power by reducing transmission strength and another requiring higher transmission power to ensure quality of service for high-priority traffic-the system may resolve the conflict by giving precedence to the higher-priority policy. In this case, the quality-of-service policy would take effect, while the power-saving policy might be temporarily adjusted or overridden to ensure the network operates according to the most critical needs. The system may also implement dynamic adjustments based on real-time network conditions. For example, during periods of peak usage, policies with high-priority levels focused on maintaining throughput and reducing latency might automatically override lower-priority policies aimed at cost savings or network optimization. This could ensure that essential services are maintained even under high demand, while less critical policies are temporarily relaxed. By assigning priority levels and adjusting policies based on these priorities, the system may effectively manage conflicts in a way that aligns with the overall goals of the 5G RAN. This method could ensure that the most important policies are consistently enforced while maintaining flexibility in how other policies are applied under changing network conditions.

In some example implementations, resolving 160 the identified conflicts may comprise creating an additional policy and an associated node as node linked via edges to the other policies with appropriate labels and properties to allow mediation via adapted queries. This may involve developing a new, intermediary policy that serves as a bridge or mediator between the conflicting policies within 5G RAN. This new policy could be designed to manage or reconcile the conflicting parameters and rules from the original policies, ensuring that both can coexist without degrading network performance. The associated node representing this new policy may be added to the graph 200, and it may be connected to the original policy nodes via edges that reflect the dependencies and relationships. To enable the system to mediate effectively, this new node may be assigned labels and properties that describe its purpose and the specific conditions under which it should intervene. For example, the new policy might specify rules for balancing network load when two policies provide contradictory bandwidth allocations for overlapping cells. These labels and properties would allow the system to identify the node when querying the graph and apply the mediation policy when relevant conditions are met. By linking the new policy node to the existing policies, the system could use adapted queries to analyze the relationships and ensure that the new node performs its intended role. These queries may retrieve the relevant nodes and evaluate how the new policy interacts with both the original policies and the network components affected by them. Over time, the system may also adjust or refine the properties of the new policy based on real-time network data or feedback, ensuring that the mediation continues to resolve conflicts effectively as the network evolves. Through this approach, the creation of an additional policy node may allow the system to adapt to complex or persistent conflicts between policies, offering a flexible and dynamic way to manage the interdependencies within the 5G RAN. This may ensure smooth operation by reducing the negative impacts of policy conflicts while maintaining overall network efficiency.

Method 100 further includes modifying 170 the graph based on the conflict-free configuration. This means that after the (computer) system has resolved any identified conflicts between policies and generated a conflict-free configuration, it may update the graph 200 to reflect these changes. The graph 200 is a representation of the target system's policies, managed objects, and target components, with nodes representing these elements and connections illustrating their relationships. When the conflict-free configuration is obtained, the (computer) system may ensure that the graph 200 accurately represents this new, optimized state. This may involve updating the relevant nodes (such as policy nodes or managed object nodes) and connections to align with the revised settings or behaviors. For example, if a conflict between two policies affecting a cell is resolved by adjusting their parameters, the graph 200 may be updated to reflect these new policy parameters and the relationships between the policies and the base station. This may keep the graph synchronized with a desired operational state of the target system, ensuring that any future queries or actions are based on the most up-to-date information.

Optionally, method 100 may further include actually applying the conflict-free configuration to the at least one target object of the target system. This refers to an act in which, after resolving conflicts between policies, the resulting conflict-free configuration is physically implemented on the target object. The target object could be a physical or logical component within the target system, such as a base station, readio unit, or virtual network function in a RAN. By applying the conflict-free configuration, the (computer) system may ensure that the policies governing the target object are executed without contradictions or conflicts. This act may translate the resolved policy rules into actual operational settings for the target object, such as configuring transmission power, bandwidth, or other parameters. A goal is to make sure the network component behaves as intended based on the optimized configuration, ensuring efficient performance and stable operation.

For example, the conflict-free configuration may be applied to the at least one target object via at least one of an API (Application Programming Interface) or a management and orchestration interface for network elements. That is, after resolving conflicts and generating the conflict-free configuration, the system uses an interface-either an API or a management and orchestration interface-to send the configuration to the target object. An API allows external systems or software to communicate with the target object by issuing commands, adjusting configurations, and retrieving data. Similarly, the management and orchestration interface (like the ORAN O1 Interface in a 5G Radio Access Network) may be a specialized protocol used to manage, configure, and monitor network elements. These interfaces may facilitate real-time updates and configuration changes across the network, ensuring the conflict-free configuration is applied efficiently and accurately to the network component.

For example, the conflict-free configuration may be applied to the at least one target object by performing a delta update, wherein only differences between a current configuration and the conflict-free configuration are applied to the at least one target object. A delta update means that the system compares the current configuration of the target object with the newly generated conflict-free configuration. It may identify specific differences-such as changes in bandwidth allocation, power levels, or other parameters-and then update only those specific aspects. This approach may minimize the amount of data that needs to be processed and reduces potential disruptions, as only the modified parts of the configuration are sent and applied.

In some example implementations, the target system comprises a plurality of target objects and associated nodes. The graph database may be queried to identify conflicts between different policies affecting a respective target object. The identified conflicts may be resolved to obtain a conflict-free configuration for the respective target object. The respective conflict-free configuration may be applied to each of the target objects to obtain a conflict free configuration for all target objects of the target system. This describes a process where the target system comprises multiple target objects, each represented by its own node 206 in the graph 200. The system queries the graph database to identify potential conflicts between different policies affecting each individual target object. For example, in a RAN, these target objects could be base stations, radio units, or other network elements. Once conflicts between the policies that control these target objects are detected, the system proceeds to resolve them, generating a conflict-free configuration for each individual target object. This conflict-free configuration ensures that all the policies governing a particular object work in harmony without causing performance issues or contradictions. The method may then apply these conflict-free configurations to each target object in the system, ensuring that the entire target system-comprising all individual objects-operates according to a unified, consistent set of rules. By applying these optimized configurations to all target objects, the system achieves a conflict-free, efficient, and stable overall operation of the network.

For example, this process could be done iteratively. In an iterative approach, the (computer) system may handle each target object one at a time, following the repetitive sequence of steps of method 100. For each target object, the (computer) system would query the graph database, identify and resolve policy conflicts, and then apply the conflict-free configuration. After completing this process for one target object, the (computer) system may move on to the next, repeating the same steps. This iterative approach may allow the (computer) system to handle potential dependencies or interactions between target objects more effectively. As each object is processed, any changes or adjustments made could impact other objects in the target system. By resolving one object at a time, the (computer) system can continuously update and optimize the configurations, ensuring that the policies are consistent across the entire (target) network. An iterative method may also allow for dynamic updates, where the system can periodically recheck and adjust configurations in real-time, ensuring ongoing alignment with network demands and operational goals. This can be particularly useful in a large, complex system like a RAN, where multiple components are interdependent.

The proposed method 100 is a computer-implemented approach for managing a target system, such as a 4G or 5G RAN, by applying policies. It organizes policies and system components as nodes 202, 206 in a graph 200 to represent their relationships and interactions. Policies define behaviors or configurations for network components, which are modeled as target objects. Connections between nodes reflect whether a policy directly or indirectly influences a target object. Method 100 includes querying the graph to identify conflicts between policies, such as contradictory configurations. The system analyzes these conflicts, adjusts nodes, connections, labels, properties or policies, and generates a conflict-free configuration. This can be done using techniques like mean values, algorithms, historical data, or machine learning. Once resolved, the system updates the graph to reflect the new configuration, ensuring the network operates efficiently and consistently. Method 100 may be used for dynamic and flexible network management, allowing for visualization and efficient conflict resolution, ensuring all policies work together harmoniously across the system.

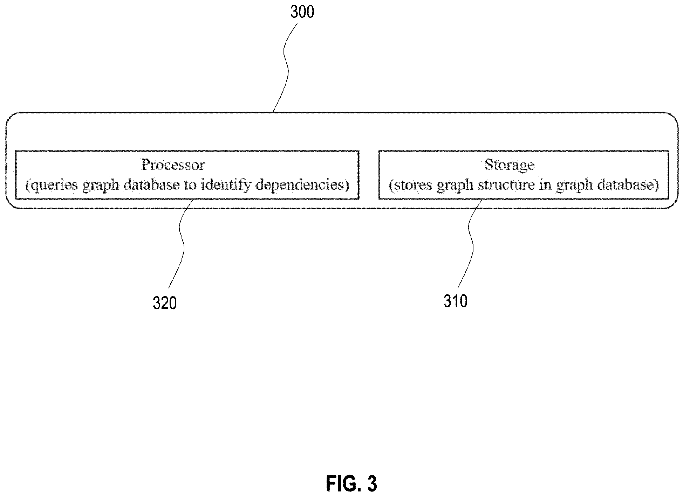

Method 100 may also be implemented in hardware using an apparatus 300 for managing a system and configurations via a plurality of policies. A simple block diagram of the apparatus 300 is shown in **Fig. 3****.**

Apparatus 300 comprises a storage 310 which is configured to store the graph (structure) 200 of the target system in a graph database. Each of the plurality of policies is represented as a respective node 202 in the graph 200 and configures desired characteristics or behaviors of the target system. At least one target object of the target system is represented as at least one node 206 in the graph. Connections 201 between nodes in the graph 200 represent direct or indirect relationships between the plurality of policies and the target object. Apparatus 300 further comprises a processor 320 which is configured to query the graph database to identify conflicts between different policies affecting the target object, resolve the identified conflicts to obtain a conflict-free configuration of the target object, and modify the graph based on the conflict-free configuration.

Apparatus 300 can be embodied in hardware by using a combination of physical or virtual components that are capable of executing the steps of method 100 for managing a (target) system and its configurations through policies. This may involve an (maybe indirect, e.g. in virtualized cloud-based systems) integration of processors, memory units, storage devices, and network interfaces. The processor 320 may be responsible for executing the instructions that define method 100, such as defining policies, creating a graph structure, and querying the database to identify dependencies. The memory/storage 310 may provide a necessary space to temporarily store the policies, queries, query results, analytics data, and graph structures (or parts of the beforementioned) during processing, while the storage devices (such as hard drives or solid-state drives) may store the graph database and its associated data including queries, query results and analytics data. The apparatus 300 may also include network interfaces that allow it to communicate with other systems, retrieve updates, change requests, or manage network policies in real-time. In some cases, the hardware could include specialized components like Field-Programmable Gate Arrays (FPGAs) or Application-Specific Integrated Circuits (ASICs) to handle specific tasks, such as optimizing the querying process or managing large-scale graph databases efficiently. By embodying the method 100 in hardware, the apparatus 300 may enable faster, more reliable execution of the policy management functions, ensuring real-time responses, analytics, evaluation, conflict resolution, decision-making, optimization and more efficient (target) system configuration.

In contrast to orchestration or 'intent' approaches, in which usually rough objectives or additional services (CFS: Customer Facing Service) are broken down into technical policies and thus parameters (RFS: Resource Facing Service) in a mostly hierarchical manner, or are compared with existing templates, embodiments of the present disclosure relate to the (overall) management of policies and thus at any point in time the overall (should-be) configuration status of the target system. This means that this disclosed method of management and governance is an intended overall state of a (target) system (e.g., a RAN) at all times, regardless of any change requests ('intents', optimizations, (change) requests ...), and which always takes all policies into account, even if they have nothing to do with any current request.

The intended state need not necessarily correspond to the actual state of the target system, which may be recorded in an inventory. However, the actual status can be synchronized in full or in part, systematically or sporadically, at certain times or regularly, manually or automatically, e.g. via synchronization mechanisms. An inventory usually does not contain various policies, but only a technical (finalized) configuration. A system typically also has different (overall) configurations or "states" over time, due to changes, optimizations, or lifecycles of components (e.g. 4G cells are replaced with 5G cells, or a broken router is replaced by another router from another supplier, or new base stations and cells are contructed and integrated into the target system and graph). This is handled via versions, whereas embodiments of the present disclosure allow different implementations: Examples are versions OF the graph, subgraph, nodes, connections, labels and/or properties; and/or versions AS (subgraph, node(s), connection(s), label(s) and/or propertie(s). Different overall Graph states/version may be used for keeping valid overall configurations, restoring previous versions and/or as histopric data for comparisons, machine learning and optimizaitons.

Any application of the overall fused configuration to the target system can be considered as a validity period, meaning that this configuration is currently active. With many changes and thus many different versions of valid configurations over time, later analytics can be easily conducted since all performance measurements and other events from the target system can be associated with the respective valid configuration, its changes, solved conflicts and initial dependencies. For example root causes of problems and incidents can be easier identified and remedied.

In the context of a RAN, the intended state may refer to a desired configuration or behavior of the target network, as dictated by policies and management systems. This intended state may include specific settings for network parameters such as frequency bands, power levels, or quality-of-service targets. However, the actual state of the target network-meaning the real-time conditions or configurations of the network components-might differ from the intended state. These discrepancies can arise due to changes in network conditions, equipment failures, manual adjustments, or the natural dynamic behavior of the network.

The actual state of the target network may be recorded in an inventory, which logs the real-time operational status of various network elements, such as base stations, radio units, and routers. Since the actual state can deviate from the intended state, it may be necessary to synchronize the two states to ensure that the target network operates as expected. This synchronization can be done manually or automatically, depending on the management approach in place.

In a RAN, synchronization might involve comparing the actual state recorded in the inventory with the intended state defined by the policies/graph (in particular the fused overall configuration) and making adjustments to bring the network into alignment with the intended configuration. This can involve establishing a comparable subgraph or graph of the actual state (actual configuration), more particular all the abovementioned (types of) nodes and connections and comparing it to the graph of embodiments of the present disclosure. It can also involve comparing - inside and/or outside of embodiments of the present disclosure - potential differences of the fused overall should-be configuration and the real configuration, and trying to apply the differences as change request towards embodiments of the present disclosure, whereas query results and analytics will show conflicts and allow evaluations which configuration is better, and respective adjustments are made to the graph, target system or a mixture of both. This process can be performed fully or partially, depending on the specific needs, and may occur systematically at regular intervals, at any change request or sporadically when issues are detected. Synchronization mechanisms may ensure that the actual configuration of the target system is kept as close as possible to the desired state, minimizing deviations, preventing misconfigurations, and maintaining the governance.

For instance, if a base station in the RAN is not following the intended power settings due to an error or external interference, the synchronization process may detect this misalignment and adjust the actual settings to match the intended state, either automatically or through manual intervention, and assures the optimal service quality for users.

Graph 200 may provide a sophistication to link entities and thus handle overall relationships. "Graph" means nodes 202, 204, 206, 208 and connections 201 or links between two nodes. Links can be preferentially directed (directed graph), and both nodes and links can have labels and properties, i.e. key-value pairs (property graph). Several links can also exist between two nodes. In the context of the present disclosure, 'connection' means that there is a continuous path from one node to another node, and this path can lead via further nodes and links.

Both nodes and links in graph 200 can be assigned labels and properties. A label may essentially be a descriptive identifier that helps categorize or name a node or a link/connection, providing context for what it represents. For example, a label might specify that a node represents a "Policy" or a specific Managed Object or a type of object,or that a link represents a "Dependency" or a prerequisite or a type of relation. A key-value pair is a way of associating specific attributes with a node or link. The key is a descriptor (such as "Bandwidth" or "Priority"), and the value provides the specific detail associated with that key (such as "10 Mbps" for bandwidth or "High" for priority). These properties enable more detailed information to be stored and retrieved from the graph, allowing for more complex queries and management of the relationships between nodes. This use of labels and key-value pairs makes the graph a (labeled) property graph, where both nodes and links/connections can carry additional metadata beyond just their basic connections, enhancing the system's ability to manage interrelated entities. Via thorough graph modelling, which depends on the implementation and domain where embodiments of the present disclosure are used, and in combination with the queries, query results, analytics, potential conflict management, evaluation, fusing into a final conflict-free overall configuration and possibility to apply the conflict-free overall configuration to a target system the method and apparatus according to embodiments of the present disclosure allow the (overall) management of a system and configurations via policies.

Policies may in the simplest case be key-value pairs which can be adopted directly as a node with at least one meaningful designation. Policies in general can be of a different type, whereby this preferably concerns criteria such as application area, importance, time, space, component type, versions, variants, categorization, classification, technology, service and the type information can be saved as a designation or property. Within embodiments of the present disclosure, complex policies are preferably modelled as several nodes and connections, each in the intended relation and with the intended information while using labels and properties. A policy can thus be a subgraph with its dedicated queries, query results and data.

Policies with a more technical character may preferably refer directly to entities of a software or a data model. In the 3GPP environment, 'Information Object Class' (IOC), 'Managed Element' (ME), 'Managed Object' (MO), 'Management Information Base' (MIB) and other descriptions from 3GPP specifications are familiar terms for the management of network resources. An information object class (IOC) represents an abstract, technologyagnostic model of a network resource used for management purposes. IOCs are used to define the attributes and behaviors that can be applied across various network components. These objects provide a consistent way of representing network elements, regardless of the underlying technology. A managed element (ME) refers to a specific network element, such as a base station or a router, that is being monitored and controlled by the network management system. The ME encompasses both hardware and software components and is responsible for providing network services to users or other network elements. A managed object (MO) is an instance of a managed entity in the network, often associated with a specific Managed Element. It represents the detailed aspects of the managed element, such as its configuration, state, and operational data. Managed objects allow network administrators to configure and manage the functionality of network elements. The management information base (MIB) is a database or repository that stores the collection of MOs within a network. It holds the values of attributes associated with each managed object and allows the management system to retrieve, modify, or monitor data regarding the configuration and state of network elements. These terms are used for 3GPP-based networks, such as LTE, 5G and 6G, where they help structure and manage complex and dynamic networks, allowing for efficient operation, configuration, and optimization of network resources. These are structured hierarchically in an information tree and can be stored and processed in whole or in part as a graph, (including interrelations between MOs and content of MOs). Everything related to MOs can thus be one or several subgraphs, depending on the usage of embodiments of the present disclosure (modelling, domain, implementation etc), especially distinctive MOs related to one or seval policies, subpolicy, technology, version, to one or several representative entities, other conditions, and/or a relation between the graph of embodiments of the present disclosure and (sub-)graphs of inventories or (network) topologies.

In the context of the present disclosure, MO refers to any structure that has a name and contains properties (attributes), , including proprietary MOs or other data structures from vendors which contain other non-3GPP data, which are for example also used in radio networks.

Policies of a more technical nature therefore may have the MO as (part of) the node name(s) and/or are connected to nodes representing MOs via links. Policies, nodes, links, designations and/or properties can also contain logical and/or set-theoretical description logics in order to use and/or evaluate them, for example a maximum value can be specified for parameters, or a designation can contain a 'NOT' or exclusion criterion.

Software and interfaces (APIs) have a data model as their basis, both in mobile communications and in other areas. Individual entities of these data models usually have a designation (e.g. name of the class, instance or API) and properties. Particularly in the mobile communications sector, not all details are specified by a standard and/or not all details of a standard are implemented exactly by the respective supplier. Since complex systems consist of a large number of components, which can also come from suppliers, equipment suppliers, partners, etc., it is part of embodiments of the present disclosure to also map and link (parts of) manufacturer-specific data models, interfaces, entities and/or MOs with designation labels and/or properties in a graph, provided it is relevant for the system or the overall configuration.

The mapping mentioned previously can form its own (sub)graph, depending on the implementation and the policy and/or MOs to be mapped. For example, the detailed implementation of network slices in the RAN is different for different network equipment providers, and the 3GPP specification only defines essential parameters, e.g. in the MO `NRCELLDU'. Policies and/or nodes can also contain only some of the possible parameters or additional parameters, depending on the implementation and the policy to be mapped.

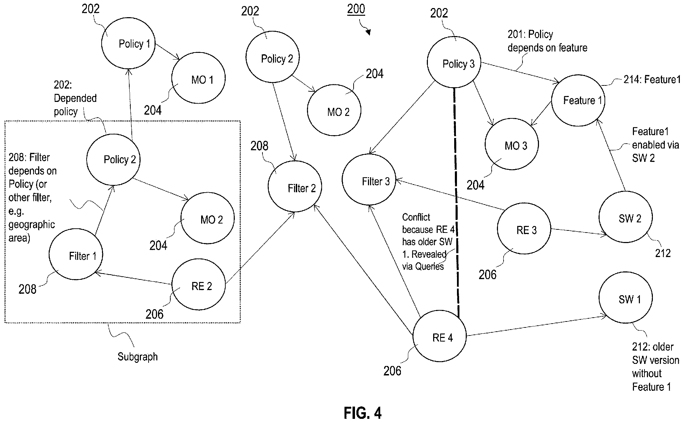

A further example of a more complex graph 200 providing a visualization of relationships between various policy nodes 202, filter nodes 208, MO nodes 204, and representative entity nodes 206 within the context of a RAN is shown in **Fig. 4****.** Graph 200 shown in Fig. 4 demonstrates how these different types of nodes interact to manage, configure, and optimize the target system.

The example graph 200 in Fig. 4, Policy 1 is connected to MO 1, which may manage (via an indirect connection) certain operational parameters of RE 2. Policy 2 is related to MO 2, which may also control aspects of RE 2. Filter 1 sits between Policy 2 and RE 2, selectively applying Policy 2 based on criteria defined by Filter 1, such as geographic location or network conditions. This portion of the graph 200 is depicted as a subgraph, indicating a contained set of interactions involving Policy 1, Policy 2, and RE 2 through Filter 1. The subgraph and any subgraph in embodiments of the present disclosure may contain own queries, query results, stored analysis and evaluation data, which might be updated on-demand (e.g.new queries from the overall graph) or automatically (e.g. regularly or depending on rules and conditions).

On the other side of the graph 200, Policy 3 interacts with MO 3 and may affect both RE 3 and RE 4 through Filter 3. An aspect of this part of the graph 200 is that Policy 3 depends on Feature 1, which is enabled via Software (SW) 2. Feature 1 may play a role in how Policy 3 is applied to the network, and SW 2 is necessary to enable this feature. RE 3 is configured with SW 2, ensuring that Feature 1 is active and Policy 3 can be fully implemented without issue. However, RE 4 relies or uses on an older version of software, specifically SW 1, which may not support Feature 1. This mismatch between the required software version for Policy 3 and the actual version installed on RE 4 causes a type of conflict. The conflict may be revealed through the querying process, where it becomes evident that Policy 3 cannot be fully applied to RE 4 because the older software version lacks the necessary feature. The conflict can be solved, also automatically, by updating the real target system object which is represented by RE4, and by updating the graph, by connecting RE4 to SW2 and deleting the connection between RE4 and SW1, as well as all other potential impacts (not shown in the figure).

The policy nodes 202 may represent the rules or guidelines that govern different aspects of the network's behavior. The policy nodes 202 include various policies like Policy 1 (e.g., Service X), Policy 2 (e.g., Cell Type V), Policy 3 (e.g., Load Balancing), and others such as Energy Saving and Event Blacklist. Each policy is responsible for dictating specific configurations or operational targets within the RAN, like load balancing or energy-saving mechanisms. In Fig. 4, Policy 2 below Policy 1 depends on Policy 1. Policy 3 depends on (HW) Feature 1. Changes in one policy or feature can have direct or indirect effects on other policies, demonstrating the interdependencies that may need to be managed in complex 4G or 5G environments.

The filter nodes 208 may act as selectors that define groups of network components (represented by representative entity nodes 206) based on specific criteria. For example, Filter 1 may represent a group defined by Area A, while Filter 2 may group network cells into a cell List. The filter nodes 208 are needed for targeted application of policies, allowing network administrators to apply specific configurations to subsets of the network rather than the entire system. In Fig. 4, filters such as Filter 1, Filter 2, and Filter 3 are used in conjunction with policies to focus the application of those policies on specific network areas or sets of cells. Policy 3, for instance, may applies configurations to RE nodes RE3 and RE 4 through Filter 3.

MO nodes 204 may contain detailed parameters and attributes necessary to manage physical or logical components of the RAN. Each MO node 204 may be responsible for controlling specific parameter sets that apply to parts of the network. For instance, MO 2 may store configurations that are influenced by Policy 1 and Policy 2. The MO nodes 204 apply settings to the network components, as specified by the related policies. Fig. 4 demonstrates how MO nodes 204 may be connected to policies and filters, ensuring that policies are applied to the correct network parameters and managed objects. For example, MO 2 is linked to RE 2 via Policy 2 and Filter 1 and contains specific parameters defined by the policies applied through the filter node.

The RE nodes 206 may represent the actual physical or logical components of the RAN. These nodes, such as Cell X, Cell Y, and Cell Z, may stand in for real-world network elements like base stations or cells. They may be managed indirectly through associated MO nodes 204, which contain the configuration parameters that define how these network elements operate.

In the example graph 200, the representative entity nodes 206 are linked to associated MO nodes 204, which contain the settings applied to control the cells or other network components. For instance, RE 2 is (indirectly) linked to MO 1 and MO 2, MO 1 being governed by Policy 1, and MO 2 being governed by Policy 1 and Policy 2. This structure may allow for efficient management of the network components by applying the appropriate policies to specific cells through their managed objects.

The connections between nodes 202, 204, 206, 208 represent the relationships and dependencies within the RAN. Policies may be connected to MOs and filters, which may then be linked to the RE nodes (the physical or logical network components). The arrows between the nodes 202, 204, 206, 208 indicate how policies impact, depend on, or apply to other nodes, highlighting the complex interdependencies within the network.

For example, Policy 1 impacts Policy 2 of the subgraph, showing that changes in Policy 1 can influence other policies' behavior. These policies, in turn, apply to specific MO nodes 204, which control the configuration of network components like RE 2. Similarly, filter nodes 208 like Filter 1 define which parts of the network (such as a specific area or list of cells) the policies will apply to.

Fig. 4 also illustrates a relationship between Policy 3 (e.g., Load Balancing) and Feature 1 (HW/SW Feature), where Policy 3 depends on Feature 1. Load balancing in a RAN is critical for ensuring that traffic is distributed efficiently across different network resources, to maintain network performance and prevent congestion. The fact that Policy 3 depends on Feature 1 means that the effectiveness of the load-balancing policy may rely on the presence or functionality of specific hardware (HW) or software (SW) features within the network infrastructure. For instance, certain HW capabilities or SW configurations might be necessary for the policy to be fully implemented. If these hardware or software features are not available or enabled (Feature 1), Policy 3 may not be able to execute effectively, potentially impacting the overall network performance. This dependency may imply that load balancing adjustments must account for whether the specific hardware or software conditions are met. It may also indicate that any changes in the HW or SW environment may directly affect how the load-balancing policy is applied, requiring dynamic updates to the policy based on the current state of these features. This level of dependency may be important for optimizing network resource usage and ensuring that the network can adapt to varying conditions, particularly as the infrastructure evolves or updates are made to hardware or software components.

Thus nodes of the graph 200 may further comprise HW and/or SW features nodes 210, 212, 214. A HW and/or SW feature nodes 210, 212 may comprise a data entity representing one or more HW or SW features associated with one or more physical or logical network components. A HW and/or SW features node 210, 212 may store attributes and parameters defining operational characteristics, availability, or status of the HW or SW features. A HW and/or SW feature node 210, 212 may be connected to one or more policy nodes 202 or MO nodes 204 in the graph, such that the application or execution of policies is contingent upon the state or functionality of the hardware or software features represented by said node. A HW and/or SW features node 210, 212 may enable dynamic adjustment of the system configurations by communicating changes in the status or parameters of the hardware or software features to the relevant policy nodes or managed object nodes.

In the context of a RAN, the attributes and parameters of a HW and/or SW features node 210, 212 may define various operational characteristics, availability, or status of hardware and software components that are essential for the network's functionality. For instance, a hardware feature node could represent a massive MIMO antenna used to handle large volumes of data traffic. The attributes of this node may include the number of active antenna elements, transmission power levels, and the operational frequency range. These attributes could determine whether the antenna is fully functional and capable of supporting the desired load-balancing or coverage policies.

Similarly, a software feature node in the graph might represent a network slicing function. Its parameters could include the available virtual network instances, resource allocation limits, or the characteristics of each network slice. These parameters may indicate whether the software feature is operating as intended (if synchronized with an inventory) and can handle additional traffic or allocate more resources to a particular slice based on demand.

The status of these hardware or software features, such as whether they are active, under maintenance, or experiencing faults, could directly influence how policies related to network performance or resource optimization are applied. For example, if a massive MIMO antenna is offline, the network may need to adjust its coverage policies to compensate for the reduced capacity. Similarly, if the network slicing function is nearing full capacity, the load-balancing policies may need to be adjusted to avoid overloading specific virtual network instances. These attributes and parameters may allow for dynamic policy adjustments based on real-time conditions in the 5G RAN.

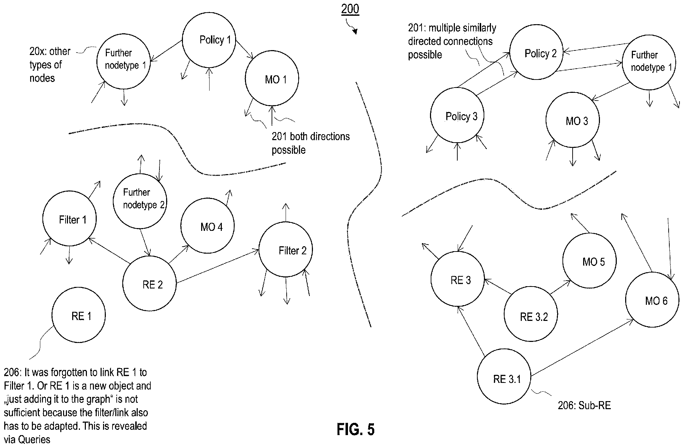

The example network graph(s) 200 shown in Fig. 5, highlights an example where RE 1 was either newly added or mistakenly not connected to Filter 1. Simply adding RE 1 to the graph without updating its links to filters is insufficient because the filters define how policies are applied to the network components. Filters may play an important role in targeting policies toward specific REs, based on criteria like geographic area or traffic load. As Fig. 5 indicates, queries may reveal this issue-specifically, that RE 1 lacks the necessary connection to Filter 1, meaning that the relevant policies cannot be applied effectively. A Query for REs of a policy might show that that RE 1 is not included (given that this should have been the case), and query for all policies of RE 1 might show that there are no connected policies (given that normally there should have been policies as query result).

Additionally, the Fig. 5 also shows more complex connections between nodes, such as multiple connections 201 between two nodes or arrows in both directions, representing more dynamic or interdependent relationships. This figure demonstrates the various possibilities when using graphs for policy and configuration management, combined with the creation of overall valid conflict-free optimized configurations of a target system via appropriate queries. These connections depict how different network components may be governed by multiple interrelated policies, especially in cases where multiple REs (sub-REs) are involved.

As has be explained previously, graphs 200 may comprise nodes representing: MOs (configuration instructions), representative Entities RE (identifying physical/logical objects which can be configured via MOs), filters (selections of a number of REs), and further nodes.

A technical policy may be at least an MO-node 204 connected to a filter-node 208, either directly, or via "another node", whereas in the latter case the "another node" groups the MO-node 204 and filter-node 208 and thus represents the policy. In general, connections have labels which thus allow better traversing the graph 200. A policy with node 202, connected MO-node 204 and connected filter-node 208 can be considered as subgraph, whereas more complex policies are possible and thus more complex subgraphs.

An aspect of the "modelling" is to define a consistent graph data model, meaning mainly node types, connection types, each with labels and properties for types of nodes and/or connections. This may enable efficient and successful queries, e.g. searching for all nodes with a certain property attribute (parameter). Successful means the result is what was intended with this query, data model and graph content. Respecting a scheme, applies for new nodes and thus connections. If certain results cannot be obtained from a graph, it might be because of an inadequate scheme. It might also be because of nodes or connections not respecting the scheme, or other reasons. Schema adaptations have impacts on the entire graph and might entail adaptations of many other nodes and/or connections.

Queries can also help to test policies, more precisely the impact. If a policy has been modeled or imported and connected to all desired nodes, a query can be defined to check if the result corresponds to the desired outcome. If not, this can be an indicator of wrong modelling and/or insufficiently defined policies.

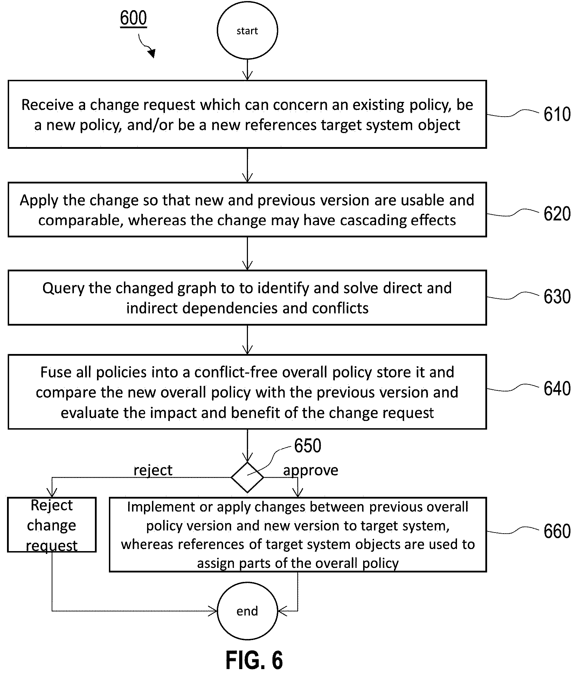

Since the overall graph corresponds to the whished state of the target system - and in the context of embodiments of the present disclosure shall be no other configuring influence on the target system -, the overall graph is a digital configuration twin of the target system. Requests such as change requests are thus tests and simulations on this digital twin to verify whether the outcome, for example a configuration optimization, is beneficial or not, as depicted in Fig. 6.

Such automated simulations, for example on different policies and with different values enable the optimization of the target system and can be further enhanced with machine learning algorithms.

Examples of policies are cell types: Typically several cells belong to a certain type or "are of a certain type". In this example, a type may be defined in relation to the geographical infrastructure, precisely high-speed train rails, and a purpose, which for these "rail cells" is to allow an optimal inter-cell handover when moving with 200 km/h. The cell handover configuration is done via parameters which are in MOs (applied to the real cell configuration), therefore this policy contains MO-nodes. The detailed modelling/implementation is not compulsory, in this example a node is labeled "MO" and "CELLULSCHALGO", with the inside parameter and value "INITULSINRADJUST=-30", while another node of the policy is labeled "MO" and "CELLSRSADAPTIVECFG", and contains the parameters and value "US-ERSRSPERIOD=4". The filter nodes is labeled "FILTER" and "RAIL_200", and contains as parameter a list of cell identifier, e.g. "Cell 1243321", "Cell464564" "Cell5435435", where these cell identifier each correspond to a node of a representative Entity (= a certain cell).

In a more complex version, the geographic areas of high-speed rails may be modelled in the graph, e.g. via geocoordinate polygon nodes, and the filter nodes or cells are connected to these nodes. Depending on various factors, other versions are possible, and in general cells are not statically always "rails cells" because this mapping depends on the radio planning, which is known to the expert. This "rail 200 policy" is thus connected to several MO-nodes via a connection labeled "defines_parameter", and connected to a filter via a connection labeled "uses_filter". Again, more complex versions can define properties for a connection, e.g. validity periods.

At the same time, embodiments of the present disclosure make it possible - by mapping all policies in a graph - to handle configurations, connections, visualizations, improvements, administrations and generally the use of the effects of individual or several policies, i.e. also subgraphs. For example, an abstract policy concerning the "network quality in district xy" can be modelled via various corresponding connections (which must first be modelled, i.e. present in the graph) to its effects on the rest of the graph and thus the logical and/or physical elements.

Mechanisms for finding out the connections and other properties, which can vary in detail depending on the implementation (e.g. choice of properties; number of nodes and links; modelling of nodes, links, designations, properties) and which can be found out via queries to the graph, may be available in basic form (e.g. calculation of the shortest link, calculation of the shortest connection, calculation of the shortest link, calculation of the longest link, etc.). These queries may be already part of the graph database or are possible with query languages such as Cypher or SPARQL in a basic form (e.g. calculation of the shortest connection, searching for nodes with a specific designation, comparison of properties and filtering the result).

Specifications or policies of a more complex nature may be mapped as a subgraph, i.e. with several nodes, links, designations and/or properties, so that the entire specification (policy) is semantically contained. A policy that affects several MOs or several parameters of different MOs, for example, is mapped in a coherent manner. 'Services' or "products" such as a network slice or a data connection in the mobile radio example are complex policies. Furthermore, all desired network properties may be mapped as existing basic specifications (the network, i.e. the mobile radio service itself, and e.g. regulatory specifications for frequency spectra) or additional specifications (e.g. new services such as the purchase of a data volume) in graphs.

Abstract specifications or policies that do not contain any parameters or values may have at least one name and are at least one node. These may be linked to other nodes as part of the modelling of the graph and/or via the import of the data into the graph via links, which also have (at least) one name. These `further nodes' and further links may each be provided with at least one clear, meaningful designation and preferably at least one property and this procedure is repeated and refined depending on the application or situation, i.e. further nodes and links are added in order to ultimately have 'technical policies' with parameters. 'Refined' means a more precise definition and design with which the specification can be implemented. Such constellations (complex or abstract policies) can be subgraphs. The other nodes, links, designations and properties may be selected in such a way that they serve the refinement, preferably reusing or copying already existing nodes, links, designations and/or properties, so that a minimally complex graph is created, i.e. as few nodes and links as possible, and as few different designations and properties as possible with clear policies at all times.

When mapping abstract policies, it may be assumed that they are 'complete' and can be refined, i.e. the (written) formalized specification applies per se, without further (implicit) assumptions or (any) background knowledge or (expert/obvious) general understanding. In one embodiment, the refinement, i.e. the connection of policies (possibly via new nodes and links) with other MO nodes, logical and/or physical element nodes is supported and/or automatically executed by an artificial intelligence (Al), for example a generative Al.

The connections of the abstract or complex policies may be connected to MO nodes and/or nodes of logical or physical elements in order to be applicable. There do not necessarily have to be connections, i.e. policies, parts of the graph, MO nodes and/or nodes of logical or physical elements can also be completely independent, i.e. without a link. Preferably, there are links so that each node is connected to the overall graph, whereby the links preferably have unique types of designations that systematically match the nodes or node types and the usage. Preferably, there are no identical generic labels for many links with different nodes (graph with little information content and difficult to analyze), nor are there only separate labels for each individual link (graph too complex and difficult to analyze), but an optimum. In one embodiment, the labels are optimized with Al support, i.e. to find ideal labels, e.g. for certain types of links, to create a more efficient graph and/or more efficient queries.

The graph and/or policies may preferably include filters, as nodes and/or sub-graphs, which define the validity of a policy. Embodiments of the present disclosure may favor policies which define a certain geographical area, a time period, filters, a guideline, limitations, exclusion criteria, impact criteria, weightings, priorities, logical relations (e.g. 'more important than') or implement them with the aid of utility functions (insofar as several nodes and links, i.e. a subgraph) and store them in the graph.

Depending on the implementation, different versions - both of policies and of MOs and/or all other parts of the graph - can be managed via a property of a node/link, a separate/own node/link per version, a dedicated node for a version, a timestamp property, a separate subgraph (branch), a log file (change log), and/or internal functions of some graph databases such as Neo4j or Janusgraph. A semantic notation such as `major.minor.patch' may be preferred for versions. The possibility of activating/deactivating policies, possibly on a time or version basis, is also part of embodiments of the present disclosure. An advantage of managing different versions is that previous overall configurations, i.e. 'states', are recorded and can be used, for example, to find out why certain effects or performances have occurred.

Predefined efficient, fast queries and traversing the graph are possible thanks to a consistent schema. Indirect (even remote) dependencies or effects are clear, as are missing dependencies/links or unnecessary dependencies/links. Automated (or manually) executed queries may thus reveal conflicts, incorrect/bad realization of policies and/or problems with the overall system and can be resolved automatically (or manually). This can be done on demand, regularly, in the event of policy changes, new policies, and/or changes to the system (for example, the addition of new mobile cells, a new software version, or an upgrade of a cell from 4G to 5G).

Especially in the case of changes, the fast performance of graph databases (compared to conventional databases or other configuration management tools used) makes it possible to check in real time or near real time (e.g. orders of magnitude of single-digit seconds) whether this change is permitted, what the effects are and whether the effects are beneficial.

The faster evaluation and systematic management of the (intended) overall system according to embodiments of the present disclosure may result in a better response to changes and fewer errors or unintended/uncontrolled effects.

A system according to embodiments of the present disclosure can be 'applied to another (real overall) system', i.e. the merging of all specifications from the graph into a final overall configuration that conforms to the configuration options of the overall system. This is preferably done via the representative entities, which preferably correspond to logical and/or physical elements, and/or which can be configured via MOs.

Policies can cause various types of conflicts and contradictions during merging, e.g. different values for the same attribute, and that there are methods for resolving them, for example via different types of prioritization or weighting of the policies, nodes, designations and/or properties. Utility functions (see literature...) can also be included in the system in the form of additional policies, nodes, labels and/or properties to support fusion.

Depending on the application scenario, implementation, policies and/or procedures for resolving potential conflicts, the fusion or the overall configuration can favor, use and/or ignore different parts of the graph. Due to the complexity and wide-ranging application possibilities of embodiments of the present disclosure, an 'optimally fused' overall configuration is not a firmly defined term, e.g. there may also be optimizations for special properties or other criteria, and the skilled person is familiar with mathematical models for optimizing connected data in a graph.

A particular advantage of embodiments of the present disclosure may be the systematic inclusion of aspects that are as temporal as possible in the policies and thus in the graph, so that the overall configuration for a certain point in time can be found more easily. For example, some policies are only valid and active at certain times (time periods). Depending on the point in time at which fusion takes place, a different overall configuration may result, whereby it is part of embodiments of the present disclosure to create an overall configuration regularly and/or as required.

Depending on the application scenario, implementation and policies, the 'necessity' can result from the fact that all validity change times are known via queries and an overall configuration is created and applied accordingly. The system is therefore the management of the desired configuration of a target system and the desired overall status of the target system (overall system) at any point in time.

Provided that the overall configuration is successfully applied to the real target system or pro-visioned - and there are no other provisioning/changing influences - the system, or more precisely the merged overall configuration, also corresponds to the target system. The method of provisioning is up to the application of embodiments of the present disclosure and depends on the target system. For example, a delta update can be performed in which only changes compared to the last provisioning are imported, or the target system only allows batch updates, or the interfaces of the target system require special coding or security mechanisms.

A special embodiment checks the real configuration of the target system systemically and/or automatically, for example per policy, per subgraph, per geographical region and/or per representative entity, in order to detect and correct configuration changes or to synchronize the system and the target system. The check can also be carried out via change notifications, messages from the target system, an inventory, monitoring system or other systems.

Embodiments of the present disclosure aim at an intended overall configuration of the target system and a digital configuration twin (as far as possible: there are also external and unpredictable factors such as the weather...) because the target system is based entirely on the system's specifications.

Often, tools already exist in IT environments to manage configurations or policies; depending on the use of embodiments of the present disclosure, these are imported into the graph or newly created. In each case, it is crucial to model the policies and relationships efficiently in order to map the semantics of the policies and to link the technical properties to the representative entities accordingly. This also involves the design of the queries in order to obtain the desired results depending on the objective. If, for example, the effects of a new (software) feature of the target system are to be determined, or a new service is to be added, a policy (and therefore also MO nodes) is added according to the schema of the graph (same modelling for similar objects) of this feature and the queries (e.g. final configurations for all representative entities) are executed so that the changes can be compared with the previous results of the same queries.

In the event of policy or configuration changes, or changes to the target system (e.g. new mobile radio cells, i.e. representative entities in the graph), the graph or subgraph is also adapted and the results of the queries are checked. Such tests are preferably carried out automatically.

Another benefit of embodiments of the present disclosure are general requests to graph, implemented via queries, to obtain information about the target system. For example, for a Service it must be known which cells are on software version 13, are not blacklisted for changes, and are located near a certain city. As long as this information is modeled in the graph, a query can be executed to obtain this information. It is a preferred implementation of embodiments of the present disclosure where queries are automatically dynamically build based on the input from the general request and/or change request, whereas the input is mapped to nodes, connections, labels and/or properties so that a query can be automatically executed.

The results are checked automatically, i.e. evaluated according to criteria depending on the use case, and preferably handled automatically, both in the case of conflicts or merging and in the case of such comparisons. This treatment is preferably carried out using pre-defined rules (e.g. threshold values or criteria such as `lower value is better'), but can also be carried out using optimization algorithms and/or self-learning algorithms or Al, depending on the implementation.

In this regard, Fig. 6 illustrates a method 600 for managing changes in a system configuration, particularly in the context of policy management.

Method 600 comprises receiving 610 a change request for a network configuration. The change request could be manual or automated and could relate to modifying an existing policy, adding a new policy, or referencing a new target system object. It can also be an optimization coming from Al, MLops (Machine Learning Operations) or rApps (Radio Applications) in an SMO (Service Management and Orchestration) environment. Essentially, the change could involve any update that affects how the system is governed or operates.

Next, method 600 comprises applying 620 the change to the graph so that both the new and previous versions of the graph are usable and comparable, whereas a previous version of all changed elements and thus "the graph" is stored before. This is beneficial because it may ensure continuity and allow for backward comparison. The change might have cascading effects, meaning that adjustments made to one part of the system could indirectly affect other parts, requiring careful consideration.

The skilled person having benefit from the present disclosure will appreciate that receiving the change request in act 610 and applying the change in act 620 may align closely with the acts 110 - 140 of method 100. When the (computer) system receives the change request, it initiates a process where the relevant policies governing the target system are defined. These policies are represented as distinct nodes in a graph structure. The purpose of defining these policies is to configure specific desired characteristics or behaviors that apply to different parts of the target system. In addition to defining policies, the (computer) system also identifies the target objects within the system that are impacted by the change request. These target objects could be physical or logical components, such as network elements or devices, and they are also represented as nodes within the graph structure. Once both the changed policies and target objects are defined, the system establishes connections between the (changed) nodes in the graph structure. Once the (changed) graph is defined and the relationships between nodes are established, the (changed) graph is stored in the graph database. Thus, receiving and applying the change is a methodical process of defining policies and their relationships to target objects, ensuring the system configuration is wellstructured and manageable. Other variants of version management are also possible, for example with (sub-)graph instances, nodes which control subgraph versions, and/or graph versions stored per node and per connection as property.

After applying the change, method 600 comprises querying 630 the modified graph to identify and resolve dependencies and conflicts. This act essentially corresponds to act 150 of method 100 and may ensure that the relationships between different policies and target objects are re-examined to address any inconsistencies or clashes that might arise from the new configuration. The goal is to maintain a harmonious, conflict-free setup across the system.

Next, method 600 comprises fusing 640 all policies of the graph into a conflict-free overall policy. This act inherently involves resolving 160 conflicts for each target object in the target system. For every target object represented in the graph, any conflicts that arise from the application of multiple policies must be addressed. This ensures that each target object receives a consistent and compatible configuration. The process of resolving conflicts involves analyzing how different policies might impose contradictory requirements on a particular target object, such as conflicting bandwidth settings for a base station or incompatible service priorities. The system identifies these conflicts by queries and examining the relationships between the policies and the target objects, and then systematically adjusting the policies, their parameters, the way they are applied to eliminate inconsistencies, or previously mentioned mechanisms. The ultimate goal is to obtain a conflict-free configuration for each target object. This means that after resolving conflicts, every target object in the target system has a coherent and functional set of configurations, aligned with the overall system objectives. Once all target objects have been processed in this manner, the result is an overall policy and configuration for the target system that is conflict-free, ensuring optimal performance and stability across the entire target system. The overall configuration can be obtained by query results for each RE, whereas conflict have been solved. Thus, act 640 may involve integrating the requested change to create a coherent, conflict-free configuration. The new overall conflict-free policy may then be compared with the previous version to evaluate its impact and benefits. This comparison may help assess whether the change improves or complicates system performance and reliability.

After evaluating the impact, the method 600 moves to a decision point 650: the change request can either be approved or rejected. If rejected, the change request is denied, and no further action is taken. If approved, the changes may be implemented at 660 by modifying the graph based on the conflict-free configuration and applying the differences between the previous and new versions to the target system. In this implementation phase, references to the target system objects may be used to assign the specific parts (for REs) of the overall configuration to the correct components of the system (identified via REs).

In a further embodiment, configuration effects such as performance metrics or measurements can also be used, especially, but not only, in the event of conflicts. Further preferred options are automatic adjustments to at least one affected policy, node, link, designation and/or property in order to resolve conflicts, and/or the addition of further policies, nodes, links, designations and/or properties in order to define the relationships more clearly. 'More unambiguous' preferably means defining the importance, semantics, temporal aspects and/or effects or defining them more precisely using predefined rules, optimization algorithms and/or self-learning algorithms or Al.

In a further embodiment, an (additional) root node may also be used a root starting point, which is connected to all nodes of a certain type in order to allow adapted queries.

Provided there are no changes to the data model, the results of these queries are available at all times, as these queries can be executed automatically at any time and their results are therefore up to date. Such query results and calculations can also be executed and/or precalculated for a part of the graph or subgraph and saved or cached in order to use the results directly instead of performing recalculations without any changes. This is preferably done automatically in the event of changes and/or regularly, e.g. to ensure the consistency of the system.

The query results and/or conflicts or possible conflict resolutions enable an assessment of the success, i.e. the functioning provisioning (correct overall configuration) and any advantages for the overall system (e.g. if a policy does not take all aspects into account, e.g. not all parameters or representative elements), and can preferably also be Al-supported. In particular, e.g. the utilization of previous results, the discovery of missing or helpful further links, the suggestion of correlations (possibly new nodes and/or links), and/or optimizations of the graph are tasks that machines or an AI can perform today.

If the overall configuration is not automatically applied to the target system, there are multiple instances or other mechanisms for separation with the target system, simulations or tests of policies or configurations can be carried out without influencing the 'real specifications'. This corresponds to a digital configuration twin of the overall system in terms of the intended configuration (there are also external influences outside the target configuration) and allows various tests, alternative versions and/or optimization of the graph including modelling, which can also be Al-supported.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A computer-implemented method (100) for managing a target system and configurations via policies, comprising:
defining (110) a plurality of policies for the target system, wherein each policy is represented as a respective node (202) in a graph structure (200) and configures desired characteristics or behaviors of at least a part of the target system;
defining (120) at least one target object of the target system, wherein the target object is represented as at least one node (204; 206) in the graph structure (200);
establishing (130) connections (201) between the nodes in the graph structure, wherein the connections represent direct or indirect relationships between the plurality of policies and the target object;
storing (140) the graph structure (200) in a graph database;
querying (150) the graph database to identify conflicts between different policies affecting the target object;
resolving (160) the identified conflicts to obtain a conflict-free configuration of the target object; and
modifying (170) the graph structure (200) based on the conflict-free configuration.

2. The method (100) of claim 1, wherein nodes of the graph structure (200) comprise policy nodes (202) and representative entity nodes (206), wherein
a policy node (202) comprises one or more policies defining desired characteristics or behaviors of a part of the target system, and
a representative entity node (206) comprises an identifier of a physical or logical target object of a part of the target system which can be configured or controlled through associated managed objects,
wherein the nodes are connected through labeled and directed connections that represent relationships between them.

3. The method (100) of claim 1 or 2, wherein the nodes of the graph structure further comprise filter nodes (208),
wherein a filter node (208) is used to select or group specific target objects based on predefined criteria for targeted application of policies,
wherein a filter node (208) has a direct or indirect connection to a policy node and a representative entity node, and/or
wherein the direct or indirect connection defines rules or configurations conditioning the connection, and/or
wherein the direct or indirect connection defines rules or configurations conditioning an implementation or application of policies of the policy node.

4. The method (100) of any one of the previous claims, wherein the nodes of the graph structure further comprise managed object nodes (204), wherein
a managed object node (204) comprises parameters and attributes for controlling or managing a physical or logical target object of a part of the target system,
a managed object node (204) is directly or indirectly connected to a representative entity node, and/or
wherein a policy node (202) is a direct or indirect linking node between at least one managed object node (204) and a filter node (208).

5. The method (100) of any one of the previous claims, wherein the nodes of the graph structure further comprise version nodes (210; 212),
wherein a version node (210; 212) comprises one or more hardware and/or software features associated with one or more physical or logical target objects of the target system.

6. The method (100) of any one of the previous claims, wherein nodes and/or connections of the graph structure (200) are indicative of a temporal or geographic validity restriction, or logical conditions that govern an application of one or more policies within the target system.

7. The method (100) of any one of the previous claims, wherein querying (150) the graph database comprises
traversing the graph structure (200) starting from a node while considering labels and conditions associated with nodes and connections of the graph structure that may affect query results; and
obtaining query results containing data objects associated with nodes and/or connections of the graph structure.

8. The method (100) of claim 7, wherein resolving (160) the identified conflicts comprises
analyzing the query results to identify potential dependencies and/or conflicts arising from several different policies applied to the same physical or logical target object; and
resolving the identified conflicts by adjusting at least one of the nodes, connections, or policies of the graph structure, wherein
resolving (160) the identified conflicts comprises applying at least one of a mean value, a mathematical algorithm, historical data, machine learning and/or other mechanisms for conflicting values.

9. The method (100) of any one of the previous claims, further comprising
applying the conflict-free configuration to the at least one target object.

10. The method (100) of claim 9, wherein the conflict-free configuration is applied to the at least one target object via at least one of an API or a management and orchestration interface for network elements.

11. The method (100) of claim 9 or 10, wherein applying the conflict-free configuration to the at least one target object comprises performing a delta update, wherein only differences between a current configuration and the conflict-free configuration are applied to the at least one target object target object.

12. The method (100) of any one of the previous claims, wherein querying (150) the graph database comprises using a machine learning algorithm trained on historical querying and/or conflict resolution data to predict and/or optimize conflicts and/or resolve conflicts.

13. The method (100) of any one of the previous claims, wherein the target system comprises a plurality of target objects and associated nodes, wherein
querying (150) the graph database to identify conflicts between different policies affecting a respective target object, and
resolving (160) the identified conflicts to obtain a conflict-free configuration for the respective target object
is applied to each of the target objects to obtain a conflict free configuration for all target objects of the target system.

14. The method (100) of any one of the previous claims, wherein the target system is a mobile communications network and the policies are network configuration policies.

15. The method (100) of claim 14, wherein
a policy node (202) is a graph entity that represents a set of rules or guidelines governing the behavior and performance of the mobile communications network,
a managed object node (204) is a data entity representing configuration parameters and control settings of a physical or logical network component of the mobile communications network, and
a representative entity node (206) is a graph entity identifying a physical or logical network component of the mobile communications network.
